# EUROPÄISCHE PATENTSCHRIFT

(11) **EP 4 305 741 B1**
(45) Veröffentlichungstag und Bekanntmachung des Hinweises auf die Patenterteilung: **28.08.2024**
(21) Anmeldenummer: 23702727.1
(22) Anmeldetag: 10.01.2023
(51) Int. Cl.: H02K 15/04, H01F 41/063, H01F 41/071, H01F 41/09, B21F 1/04

(54) **VORRICHTUNG UND VERFAHREN ZUM HERSTELLEN VON WELLENWICKLUNGSDRÄHTEN FÜR EINE SPULEN-WICKLUNG**
DEVICE AND METHOD FOR PRODUCING WAVE WINDING WIRES FOR A COIL WINDING
DISPOSITIF ET PROCÉDÉ DE PRODUCTION DE FILS D'ENROULEMENT D'ONDES POUR UN ENROULEMENT DE BOBINE

(30) Priorität: 11.01.2022 DE 102022000087
(43) Veröffentlichungstag der Anmeldung: 17.01.2024
(73) Patentinhaber: Grob-Werke GmbH & Co. KG, 87719 Mindelheim (DE)
(72) Erfinder: RAUSCHER, Ralf, 87748 Fellheim (DE); FENDT, Dominik, 86513 Ursberg (DE); FENDT, Simon, 86899 Landsberg (DE); ZIMMERMANN, Tim, 87700 Memmingen (DE)
(74) Vertreter: KASTEL Patentanwälte PartG mbB
(86) Internationale Anmeldenummer: PCT/DE2023/100011
(87) Internationale Veröffentlichungsnummer: WO 2023/134828

(56) Entgegenhaltungen:
- WO-A1-2019/101272
- US-A1- 2016 052 041

## Beschreibung

Die Erfindung betrifft eine Wellenwicklungsherstellvorrichtung zum Herstellen von Wellenwicklungsdrähten für eine Spulenwicklung einer elektrischen Maschine durch Flachwickeln. Weiter betrifft die Erfindung ein Wellenwicklungsherstellverfahren zum Herstellen von Wellenwicklungsdrähten für eine Spulenwicklung einer elektrischen Maschine durch Flachwickeln. Weiter betrifft die Erfindung ein Computerprogrammprodukt mit Anweisungen zum Durchführen eines solchen Wellenwicklungsherstellverfahrens.

Zum technologischen Hintergrund und zum Stand der Technik wird auf folgende Literaturstellen verwiesen:
[1] EP 1 270 104 A1
[2] WO 2017/148 619 A1
[3] US 2016/0 052 041 A1
[4] WO 2019/101 272 A1
[5] WO 2019/166 060 A1 und
[6] WO 2019/166 061 A1.

Aus [1] sind eine Vorrichtung und ein Verfahren zum mäanderförmigen Biegen von Rohren für Wärmetauscher, wie z.B. bei Kühlschränken bekannt, wobei besondere Maßnahmen gegen das Kollabieren der Rohre beim Biegen vorgesehen sind. Die aus [1] bekannte Biegevorrichtung weist einen Linearführungsmechanismus und eine Reihe von Formelementen auf. An den Formelementen istjeweils eine zylinderförmige Biegeform zum Formen einer runden Umbiegung der Rohre vorgesehen. Die Formelemente sind auf dem Linearführungsmechanismus relativ zueinander linear bewegbar und um jeweils eine Drehachse drehbar gelagert derart, dass jeweils benachbarte Formelemente gegensinnig zueinander drehen und sich die Formelemente dabei mit ihren Drehachsen zueinander annähern. Der Ablauf der Verdrehung benachbarter Formelemente ist durch eine Zahnstange und ein Stirnrad synchronisiert. Es ist mit dieser Vorrichtung nicht möglich, eine Kontur in die Umbiegung zu formen, da diese nur um einen vorgegebenen Radius um den Mittelpunkt des Stirnrads gebogen werden kann. Des Weiteren entsteht aufgrund der Art der Verzahnung eine Relativbewegung zwischen den einzelnen Formelementen und dem Rohr. Dies ist bei den mit [1] zu verbiegenden Rohren unkritisch, wäre aber zum Verbiegen von Drähten für Spulenwicklungen, die in aller Regel mit einer äußeren Isolierbeschichtung versehen sind, nachteilig. Ein weiterer Nachteil ist, dass die geraden Abschnitte nicht fest in der Vorrichtung eingespannt sind, sondern nur gegen einen einseitigen Anschlag gedrückt werden.

Beim Biegen von Drähten zu mäanderförmigen Wellenwicklungsdrähten für Spulenwicklungen ist es dagegen erwünscht, im Wesentlichen geradlinige Drahtabschnitte mit Wellenwicklungsköpfen dazwischen zu erhalten, die bereits möglichst exakt positioniert zueinander sind, um sie später einfacher in das mit der Spulenwicklung zu versehende Bauteil einfügen zu können. Aufgrund der am Ende vorteilhaften Parallelität der einzelnen geraden Drahtabschnitte ist somit eine Halterung erwünscht, um so definiert zu überbiegen und anschließend wieder in eine Endposition fahren zu können.

Im Gegensatz zu [1] betreffen die Literaturstellen [2] bis [4] Vorrichtungen und Verfahren zum Herstellen von mäanderförmigen Wellenwicklungsdrähten für eine Spulenwicklung einer elektrischen Maschine durch Flachwickeln.

Um die Grundform einer Wellenwicklung herzustellen, gibt es verschiedene Wickelverfahren. Ziel beim Flachwickeln ist es, den Draht mit rechteckigem Querschnitt möglichst schonend in der Ebene in die gewünschte Form zu biegen.

Aus [2] sind eine Vorrichtung und ein Verfahren zum Herstellen eines wellenförmig gebogenen Drahtsegments, insbesondere für die Verwendung als Statorwicklung in einer elektrischen Maschine, mit einer Linearführung und mit mehreren Formwerkzeugen bekannt, die längsverschieblich und drehbar an der Linearführung gelagert sind und die jeweils einen Aufnahmebereich zur Fixierung des zu biegenden Drahtsegments aufweisen, wobei die Formwerkzeuge, um das daran fixierte Drahtsegment in Wellenform biegen zu können, gegensinnig verdrehbar und gleichzeitig entlang der Linearführung zusammenfahrbar sind. Die Vorrichtung enthält allerdings keine Lösung, den Vorgang zu synchronisieren, das heißt die Dreh- und Linearbewegungen aller Formelemente aufeinander abzustimmen. Des Weiteren ist die Biegekontur des Drahtes während des Biegevorgangs komplett undefiniert, da die einzelnen Formelemente nur Endanschläge zueinander besitzen jedoch keine Verbindung während des eigentlichen Prozesses. Der Draht wölbt sich also mit einer unbestimmten Form. Des Weiteren gibt es keine Lösung zum Antrieb der Vorrichtung, weder für die Linearbewegung noch die Drehbewegung der Formelemente.

Auch aus [3] sind eine Vorrichtung und ein Verfahren zum Herstellen eines wellenförmig gebogenen Drahtsegments bekannt. Hierbei werden Schieber mit Hilfe einer Spindel gegeneinander verschoben und zeitgleich quer zur Ziehbewegung zusammengefahren. Das gleichmäßige Zusammenfahren der einzelnen Schieber wird hierbei durch eine Scherenkinematik gewährleistet. Es müssen also nur noch drei Achsen elektrisch synchronisiert werden. Die Form des Kopfes wird bei diesem Verfahren durch die Form des Schiebers ausgeprägt. Bei diesem Verfahren sind die geraden Abschnitte nicht fest in der Vorrichtung gehalten, sondern werden nur aufgrund der Spannung zwischen den einzelnen Schiebern gerade gezogen. Dabei wird die Belastung für den Draht sehr hoch, da der Kopf im gleichen Schritt geformt werden soll und die dafür erforderliche Zugkraft direkt zu einer Längung des Drahtes führt. Bei dieser Vorrichtung muss der Kopfbiegeprozess mit den zugehörigen Formelementen und den Zustellbewegungen der Formelementen und mit dem Drahtbiegeverhalten exakt auf die Längsbewegung der Schere abgestimmt sein. Geringste Schwankungen im Biegeverhalten wie z.B. aufgrund unterschiedlicher Drahtqualitäten führt dazu, dass die Nachführung der Längsachse nicht mehr exakt zum Kopfbiegeverhalten passt, und dadurch der gerade Bereich der S-förmigen Wicklung mitverformt wird, was zu späteren Nachteilen beim Einbringen der Wicklung in den Stator führt. Bei diesem Biegeverfahren wird der gerade Teil der Wicklung nicht geführt oder stabilisiert, und bleibt nur gerade, wenn die Kopfformung und Längsbewegung der Anlage exakt abgestimmt ist und somit keine resultierende Kraft auf diesen Leiterbereich wirkt. Die Abstimmung hier muss durch Anpassung der Scherenkinematik erfolgen, was komplex und kostenintensiv ist. Geometrisch bedingt kann auch das einzelne Formelement den Draht insgesamt nur um max. 180° umformen, d.h. es kann der Draht nicht überbogen werden (>180°), um die Rückfederung zu kompensieren. Sobald eine Rückfederung vorhanden ist (was bei Kupferstäben der Fall ist), wird der Drahtbereich am Eingang und Ausgang nicht parallel zueinander sein, was zur Folge hat, dass der gewünschte gerade Drahtbereich nie exakt gerade sein wird, sondern immer prozessbedingt bzw. anlagenbedingt einen leichten S-Schlag haben wird. Ein Drahtzug während dem Biegen kann zwar den Effekt etwas reduzieren, ist aber auch aufgrund nicht gewünschter Querschnittsverjüngung begrenzt.

Die Literaturstelle [4] offenbart eine Wellenwicklungsherstellvorrichtung zum Herstellen von Wellenwicklungsdrähten für eine Spulenwicklung einer elektrischen Maschine durch Flachwickeln, umfassend: einen Linearführungsmechanismus und eine Reihe von Formelementen, die jeweils eine Halterung zum Halten eines geradlinigen Drahtabschnitts eines zu biegenden Drahts und eine Biegeform zum Formen eines Wellenwicklungskopfbereichs zwischen den geradlinigen Drahtabschnitten aufweisen, wobei die Formelemente auf dem Linearführungsmechanismus relativ zueinander linear bewegbar und um jeweils eine Drehachse drehbar gelagert sind derart, dass aus einer Grundstellung heraus, in der die Halterungen der Formelemente zueinander ausgerichtet sind, jeweils benachbarte Formelemente gegensinnig zueinander drehen und sich die Formelemente dabei mit ihren Drehachsen zueinander annähern, um so aus dem in den Halterungen gehaltenen Draht einen mäanderförmigen Wellenwicklungsdraht mit geradlinigen Drahtabschnitten und dachförmigen Wellenwicklungsköpfen dazwischen zu bilden.

Bei der aus dem nächstliegenden Stand der Technik nach [4] bekannten Vorrichtung sind die Formelemente drehbar auf den Wagen einer oder mehrerer Linearführungen gelagert und über eine Verzahnung gekoppelt. Dies ermöglicht eine gegensinnige Verdrehung der Formelemente, wobei die Verdrehung ausschließlich durch das Zusammenfahren der Führungswagen entlang der Linearführung gesteuert wird. Durch das Übertragen der Drehbewegung von einem Formelement auf das Nachfolgende, kann dies auch als "Reihenschaltung" bezeichnet werden, bei der der Drehwinkel der Formelemente entscheidend von deren Längsposition abhängt.

Das gegenseitige Abrollen entlang der speziellen Wälzkurve ermöglicht eine konstante Spannung im Draht während des Biegens, wodurch komplexe Kopfformen hergestellt und eine Verformung der geraden Teilstücke verhindert werden kann. Die Verzahnung ergibt zum Reibschluss entlang der Wälzkurve zusätzlichen Formschluss, welcher das synchrone Drehen gewährleisten soll.

Im Folgenden sind die wesentlichen Arbeitsschritte erläutert.

Zu Beginn werden in einer Grundstellung die Formelemente mit ihren Halterungen zueinander ausgerichtet, so dass die Halterungen eine geradlinige Aufnahme bilden. In dieser Ausgangsposition wird der Draht in die gerade Vorrichtung eingeführt.

Anschließend werden die Formelemente gleichmäßig zusammengefahren und gegensinnig verdreht.

In der Endposition liegen die in den Halterungen gehaltenen geradlinigen Drahtabschnitte im Wesentlichen parallel zueinander, wobei benachbarte geradlinige Drahtabschnitte wechselweise an der einen oder der anderen Seite durch einen dachförmigen Wicklungskopf verbunden sind, der durch entsprechend Biegeformen an den Formelementen geformt worden ist.

Nach Erreichen der Endlage werden ein oder mehrere Stempel zur Formung einer Gegenbiegung im Wicklungskopf ausgefahren. Das Gegenbiegen formt den Draht exakt entlang der gewünschten Kontur und reduziert außerdem die Rückfederung des Drahtes, nachdem dieser den Formelementen entnommen wurde. Während des Gegenbiegens werden die Drahtenden mithilfe eigenständiger Aktuatoren entlang der Kontur der äußeren Formelemente gebogen.

Die Vorrichtung und das Verfahren wie in [4] beschrieben haben sich bewährt. Es gibt aber dennoch weiteres Verbesserungspotential.

Z.B. drehen sich beim einseitigen Einleiten der Drehbewegung sich die ersten Formelemente aufgrund vom Spiel in der Verzahnung schneller ein. Durch diese Längenänderung könnte es dann auch zu einem Verlust der Synchronisation (Zahn wird übersprungen) kommen.

Bei Kontaktverlust der Formelemente in Längsrichtung kann ebenfalls ein Synchronisationsverlust eintreten, insbesondere bei Bewegungen ohne Draht, was z.B. bei der Inbetriebnahme solch einer Anlage möglich ist.

Ausgehend von [4] hat sich die Erfindung zur Aufgabe gestellt, eine Vorrichtung und ein Verfahren zum Herstellen von Wellenwicklungsdrähten für eine Spulenwicklung einer elektrischen Maschine durch Flachwickeln weiter zu verbessern.

Zum Lösen dieser Aufgabe schafft die Erfindung Wellenwicklungsherstellvorrichtungen und Wellenwicklungsherstellverfahren gemäß den beigefügten unabhängigen Ansprüchen.

Vorteilhafte Ausgestaltungen sind Gegenstand der Unteransprüche.

Die Erfindung schafft gemäß einem ersten Aspekt davon eine Wellenwicklungsherstellvorrichtung zum Herstellen von Wellenwicklungsdrähten für eine Spulenwicklung einer elektrischen Maschine durch Flachwickeln, umfassend:
einen Linearführungsmechanismus und
eine Reihe von Formelementen, die jeweils eine Halterung zum Halten eines geradlinigen Drahtabschnitts eines zu biegenden Drahts und eine Biegeform zum Formen eines Wellenwicklungskopfbereichs zwischen den geradlinigen Drahtabschnitten aufweisen, wobei die Formelemente auf dem Linearführungsmechanismus relativ zueinander linear bewegbar und um jeweils eine Drehachse drehbar gelagert sind derart, dass aus einer Grundstellung heraus, in der die Halterungen der Formelemente zueinander ausgerichtet sind, jeweils benachbarte Formelemente gegensinnig zueinander drehen und sich die Formelemente dabei mit ihren Drehachsen zueinander annähern, um so aus dem in den Halterungen gehaltenen Draht einen mäanderförmigen Wellenwicklungsdraht mit geradlinigen Drahtabschnitten und dachförmigen Wellenwicklungsköpfen dazwischen zu bilden,
wobei der Linearführungsmechanismus eine erste Linearführung und eine zweite Linearführung aufweist, deren Abstand zueinander veränderbar ist,
wobei weiter ein Wandlermechanismus zum Umsetzen einer Veränderung des Abstandes der ersten Linearführung und der zweiten Linearführung in die Drehbewegung der Formelemente vorgesehen ist.

Es ist bevorzugt, dass der Wandlermechanismus pro zu drehendem Formelement jeweils einen Wandler aufweist, der mit dem zugeordneten Formelement mitbeweglich auf dem Linearführungsmechanismus gelagert ist.

Es ist bevorzugt, dass die Reihe von Formelementen alternierend erste und zweite Formelemente aufweist, wobei die zweiten Formelemente zur gegensinnigen Drehung zu den ersten Formelementen ausgebildet sind,
wobei der Linearführungsmechanismus eine dritte Linearführung aufweist, wobei die erste Linearführung zwischen der zweiten und dritten Linearführung angeordnet ist und die zweite und dritte Linearführung zum Antreiben der Drehbewegung auf die erste Linearführung zu und von der ersten Linearführung weg bewegbar ist,
wobei erste Wandler zum Antreiben der Drehbewegung der ersten Formelemente erste Abgreifelemente aufweisen, die linear beweglich an der zweiten Linearführung gelagert sind und zweite Wandler zum Antreiben der Drehbewegung der zweiten Formelemente zweite Abgreifelemente aufweisen, die linear beweglich an der dritten Linearführung gelagert sind.

Es ist bevorzugt, dass die Wandler Hebelkinematiken zum Umsetzen der Bewegung der Linearführungen zueinander und voneinander weg in eine Drehbewegung der zugeordneten Formelemente aufweisen.

Es ist bevorzugt, dass die erste Linearführung eine ortsfeste Führungsschiene aufweist, auf der Führungswagen frei verschiebbar gelagert sind, auf denen jeweils ein Formelement mit seiner Drehachse drehbar gelagert ist, und
dass die zweite Linearführung eine Verteilerschiene aufweist, die quer zur Erstreckung der Führungsschiene verschiebbar gelagert ist.

Eine bevorzugte Ausgestaltung der Wellenwicklungsherstellvorrichtung weist einen Aktuator zum Verändern des Abstands der Linearführungen des Linearführungsmechanismus auf.

Eine bevorzugte Ausgestaltung der Wellenwicklungsherstellvorrichtung weist einen ersten Aktuator zum Antreiben der Bewegung der zweiten Linearführung und einen mit dem ersten Aktuator gekoppelten oder synchronisierten zweiten Aktuator zum Antreiben der Bewegung der dritten Linearführung auf.

Eine bevorzugte Ausgestaltung der Wellenwicklungsherstellvorrichtung weist einen Kopplungsmechanismus zum Koppeln des Aktuators an die zweite Linearführung und die dritte Linearführung auf.

Es ist bevorzugt, dass Formelemente einzeln austauschbar an dem Linearführungsmechanismus gelagert sind.

Es ist bevorzugt, dass die Formelemente frei relativ zueinander verschiebbar auf dem Linearführungsmechanismus gelagert sind und dass benachbarte Formelemente über wenigstens eine mechanische Steuerkurve miteinander derart in Eingriff sind, dass die relative Verschiebung der Formelemente zueinander über die Drehung der Formelemente angetrieben wird.

Es ist bevorzugt, dass benachbarte Formelemente dazu ausgebildet sind, während der Drehbewegung gegenseitig auf einer Wälzkurve abzurollen.

Es ist bevorzugt, dass benachbarte Formelemente dazu ausgebildet sind, sich während der gesamten Drehbewegung zum Formen des Wellenwicklungsdrahtes auf Wälzkurven aneinander abzustützen.

Eine bevorzugte Ausgestaltung der Wellenwicklungsherstellvorrichtung weist eine Presskrafteinleiteinrichtung auf, die dazu ausgebildet ist, beim Zusammenfahren und/oder beim Auseinanderfahren der Formelemente eine Presskraft zur Aufrechterhaltung der Abstützung benachbarter Formelemente über die Wälzkurve(n) einzuleiten.

Es ist bevorzugt, dass die Presskrafteinleiteinrichtung dazu ausgebildet ist, eine von der Drehrichtung der Formelemente unabhängige Kraft an einen auf dem Linearführungsmechanismus beweglichen Führungswagen wenigstens eines äußeren Formelements der Reihe von Formelementen einzuleiten.

Es ist bevorzugt, dass das andere äußere Formelement der Reihe von Formelementen an dem Linearführungsmechanismus fixiert ist und/oder dass die Presskrafteinleiteinrichtung dazu ausgebildet ist, auf wenigstens einen weiteren an dem Linearführungsmechanismus beweglichen Führungswagen eines weiteren Formelements eine Presskraft einzuleiten.

Es ist bevorzugt, dass die Presskrafteinleiteinrichtung zum Einleiten einer Presskraft durch aufeinander zu Bewegen mehrerer Formelemente ausgebildet ist.

Es ist bevorzugt, dass die Presskrafteinleiteinrichtung wenigstens eine vorzugsweise elastische Spanneinrichtung zur Einleitung einer Spannkraft zum Zusammenspannen benachbarter Formelemente aufweist.

Vorzugsweise weist die Wellenwicklungsherstellvorrichtung eine Drahtendenbiege- und -fixiereinrichtung auf, die dazu eingerichtet ist, die Enden des in die linear ausgerichteten Halterungen eingefügten zu biegenden Drahts vor der Drehbewegung der Formelemente umzubiegen und formschlüssig an dem zugeordneten äußeren Formelement zu fixieren.

Es ist bevorzugt, dass die Drahtendenbiege- und Fixiereinrichtung dazu ausgebildet ist, die Drahtenden derart zu verbiegen, dass aus den äußeren Formelementen herausstehende Drahtenden versetzt parallel zu den in der Halterung aufgenommenen Drahtabschnitten verlaufen.

Es ist bevorzugt, dass die Drahtendenbiege- und Fixiereinrichtung dazu ausgebildet ist, die Drahtenden an einer äußeren Biegeform der äußeren Formelemente zu formen.

Gemäß einem weiteren Aspekt schafft die Erfindung ein Wellenwicklungsherstellverfahren zum Herstellen von Wellenwicklungsdrähten für eine Spulenwicklung einer elektrischen Maschine durch Flachwickeln, umfassend:
a) Bereitstellen einer Reihe von Formelementen, die jeweils eine Halterung zum Halten eines geradlinigen Drahtabschnitts eines zu biegenden Drahts und eine Biegeform zum Formen eines Wellenwicklungskopfbereichs zwischen den geradlinigen Drahtabschnitten aufweisen, wobei die Formelemente relativ zueinander linear bewegbar und um jeweils eine Drehachse drehbar gelagert sind,
b) Einfügen eines Drahtes in die zueinander ausgerichteten Halterungen der Formelemente,
c) Antreiben von gegensinnigen Drehbewegungen jeweils benachbarter Formelemente mittels Veränderns eines Abstands von Linearführungen eines Linearführungsmechanismus zur Führung der linearen Bewegung der Formelemente und Umsetzen der Abstandsveränderung in Drehbewegungen der Formelemente,
d) Biegen eines mäanderförmigen Wellenwicklungsdrahts mit geradlinigen Drahtabschnitten und dachförmigen Wellenwicklungsköpfen dazwischen durch die gegensinnigen Drehbewegungen.

Es ist bevorzugt, dass Schritt c) die Schritte umfasst:
Führen der Linearbewegung der Formelemente auf einer ersten Linearführung und Verschieben einer zweiten und/oder einer dritten Linearführung relativ zur ersten Linearführung in einer Richtung quer zur Linearbewegungsrichtung der Formelemente und
Abgreifen der relativen Verschiebebewegung der Linearführungen mittels an der zweiten und/oder dritten Linearführung verschiebbar gelagerten Abgreifelementen von Wandlern, die jeweils den Formelementen zugeordnet sind und sich mit den zugeordneten Formelementen in Linearbewegungsrichtung mitbewegen.

Es ist bevorzugt, dass in Schritt c) die erste Linearführung ortsfest gehalten wird und die zweite und/oder dritte Linearführung als Verteilerschiene auf die erste Linearführung zu und von ihr weg bewegt werden.

Es ist bevorzugt, dass die lineare Position der Formelemente zueinander durch gegenseitiges Abstützen jeweils benachbarter Formelemente auf Wälzkurven eingestellt wird.

Vorzugsweise umfasst das Wellenwicklungsherstellverfahren den Schritt: Einleiten einer Presskraft zur Aufrechterhaltung der Abstützung benachbarter Formelemente über die Wälzkurven beim Zusammenfahren und/oder beim Auseinanderfahren der Formelemente.

Es ist bevorzugt, dass das Einleiten der Presskraft Einleiten einer von der Drehrichtung der Formelemente unabhängigen Kraft an einen auf einem Linearführungsmechanismus beweglichen Führungswagen wenigstens eines äußeren Formelements umfasst.

Es ist bevorzugt, dass das Einleiten der Presskraft ferner das Einleiten wenigstens einer weiteren Kraft auf wenigstens einen weiteren auf dem Linearführungsmechanismus beweglichen Führungswagen eines weiteren Formelements umfasst.

Es ist bevorzugt, dass das Einleiten der Presskraft das relative Linearbewegen mehrerer Formelemente umfasst.

Es ist bevorzugt, dass das Einleiten der Presskraft das Einleiten einer vorzugsweise elastischen Spannkraft zum Zusammenspannen benachbarter Formelemente umfasst.

Vorzugsweise umfasst das Wellenwicklungsherstellverfahren ferner:
aa) mäanderförmiges Verbiegen eines Drahtes zu einer Wellenwicklung mit geradlinigen Drahtabschnitten, die durch Wellenwicklungsköpfe miteinander verbunden sind und
bb) Umbiegen von Drahtenden des Drahtes,
wobei Schritt bb) vor Schritt aa) erfolgt.

Es ist bevorzugt, dass Schritt bb) formschlüssiges Fixieren der Drahtenden an äußeren Formelementen einer Wellenwicklungsherstellvorrichtung zur Durchführung des Schritts aa) umfasst.

Es ist bevorzugt, dass Schritt bb) derart durchgeführt wird, dass die umgebogenen Drahtenden versetzt parallel zu dem nächsten benachbarten geradlinigen Drahtabschnitt verläuft.

Vorzugsweise werden die oder zumindest einige der Drahtenden in Schritt bb) zum Bilden von Anschlussdrähten zum Anschließen des Wellenwicklungsdrahts, insbesondere an ein Verschaltelement zum Anschließen der aus Spulenmatte bzw. Spulenwicklung, umgebogen.

Vorzugsweise wird bei dem Wellenwicklungsherstellverfahren gemäß einer der voranstehenden Ausgestaltungen eine Wellenwicklungsherstellvorrichtung nach einer der voranstehenden Ausgestaltungen verwendet.

Vorzugsweise weist die Wellenwicklungsherstellvorrichtung eine elektronische Steuerung auf, die dazu eingerichtet ist, die Wellenwicklungsherstellvorrichtung zum Durchführen des Wellenwicklungsherstellverfahrens nach einer der voranstehenden Ausgestaltungen anzusteuern.

Insbesondere wird demnach eine Steuerung für eine Wellenwicklungsherstellvorrichtung nach einer der voranstehenden Ausgestaltungen vorgesehen, welche Steuerung dazu eingerichtet ist, die Wellenwicklungsherstellvorrichtung zum Durchführen des Wellenwicklungsherstellverfahrens nach einer der voranstehenden Ausgestaltungen anzusteuern.

Die Steuerung ist vorzugsweise eine elektronische Steuerung, mehr bevorzugt ausgebildet als Rechenvorrichtung mit entsprechend geladener Software.

Ein weiterer Aspekt der Erfindung betrifft eine entsprechende Software. Insbesondere schafft die Erfindung gemäß dem weiteren Aspekt ein Computerprogramm enthaltend maschinenlesbare Anweisungen, die eine Wellenwicklungsherstellvorrichtung nach einer der voranstehenden Ausgestaltungen dazu veranlassen, das Wellenwicklungsherstellverfahren nach einer der voranstehenden Ausgestaltungen durchzuführen.

Die durch bevorzugte Ausgestaltungen der Vorrichtung und des Verfahrens herstellbaren mäanderförmigen Wellenwicklungsdrähte haben im Wesentlichen parallel zueinander verlaufende geradlinige Drahtabschnitte und dachförmige Wellenwicklungsköpfe dazwischen. Die geradlinigen Drahtabschnitte sind vorzugsweise dazu bestimmt und ausgebildet, in Nuten des mit der Wellenwicklung zu versehenden Bauteils eingefügt zu werden. Die geradlinigen Drahtabschnitte sind entsprechend parallel zu einander ausgerichtet, können aufgrund von Rückfederungen auch von der streng parallel zueinander ausgerichteten Richtung abweichen.

Bevorzugte Ausgestaltungen der Erfindung betreffen Vorrichtungen und Verfahren zum Herstellen von Wellenwicklungsdrähten durch Flachwickeln, wobei mehrere dieser Wellenwicklungsdrähte zu einer Spulenmatte zusammengefügt werden können, zum Beispiel derart wie dies in den Literaturstellen [5] und [6] beschrieben und gezeigt ist. Es wird für weitere Einzelheiten zu den möglichen Ausbildungen der Wellenwicklungsdrähte ausdrücklich auf [5] und [6] verwiesen.

Bei Vorrichtungen gemäß bevorzugten Ausgestaltungen sind die Formelemente mit einer Hebelkinematik angetrieben.

Ausführungsbeispiele der Erfindung werden im Folgenden anhand der beigefügten Zeichnungen näher erläutert. Darin zeigt:
Fig. 1 eine Draufsicht auf eine bevorzugte Ausführungsform einer Wellenwicklungsherstellvorrichtung zum Herstellen eines mäanderförmig gebogenen Wellenwicklungsdrahts in einer Grundstellung;
Fig. 2 eine Ansicht wie in Fig. 1 auf die Wellenwicklungsherstellvorrichtung in einer Zwischenstellung;
Fig. 3 eine Ansicht wie in Fig. 1 und 2 auf die Wellenwicklungsherstellvorrichtung in einer Endstellung;
Fig. 4 ein vergrößertes Detail von Fig. 2;
Fig. 5 eine perspektivische Ansicht eines der Formelemente der Wellenwicklungsherstellvorrichtung mit einer Ausführungsform eines Linearführungsmechanismus und eines Wandlermechanismus;
Fig. 6 ein schematisches Blockschaltbild der Wellenwicklungsherstellvorrichtung;
Fig. 7 eine Seitenansicht einer Reihe von Formelementen mit Linearführung bei einer ersten Ausführungsform der Wellenwicklungsherstellvorrichtung in einer Grundstellung;
Fig. 8 eine schematische Draufsicht auf die Reihe von Formelementen von Fig. 7 in einer Endposition;
Fig. 9 eine Seitenansicht der Reihe von Formelementen mit Linearführung bei einer zweiten Ausführungsform der Wellenwicklungsherstellvorrichtung in der Grundstellung;
Fig. 10 eine Seitenansicht der Reihe von Formelementen mit Linearführung bei einer dritten Ausführungsform der Wellenwicklungsherstellvorrichtung in der Grundstellung;
Fig. 11 eine Seitenansicht der Reihe von Formelementen mit Linearführung bei einer vierten Ausführungsform der Wellenwicklungsherstellvorrichtung in der Grundstellung;
Fig. 12 eine Seitenansicht der Reihe von Formelementen mit Linearführung bei einer fünften Ausführungsform der Wellenwicklungsherstellvorrichtung in der Grundstellung;
Fig. 13 eine Draufsicht auf eine Reihe von Formelementen einer sechsten Ausführungsform der Wellenwicklungsherstellvorrichtung in der Grundstellung bei einem Einführen eines zu biegenden Drahts und
Fig. 14 die Draufsicht von Fig. 13 nach einem ersten Schritt eines Umformverfahren zum Herstellen des Wellenwicklungsdrahtes, insbesondere zum Ausbilden eines Anschlussdrahts.

In den beigefügten Figuren sind verschiedene Ausführungen einer Wellenwicklungsherstellvorrichtung 10 dargestellt. Die Wellenwicklungsherstellvorrichtung 10 ist zum Herstellen von Wellenwicklungsdrähten für eine Spulenwicklung einer elektrischen Maschine durch Flachwickeln ausgebildet.

Wie dies insbesondere in [5] und [6] beschrieben und gezeigt ist, kann man aus Wellenwicklungsdrähten Wickelmatten - auch Spulenmatten genannt - zum Herstellen einer Spulenwicklung einer elektrischen Maschine zusammensetzen. Unter einer Wickelmatte wird ein aus mehreren Wellenwicklungsdrähten (Leitern) gebildetes mattenförmiges Leiterbündel verstanden. Wellenwicklungsdrähte sind wellenartig gebogene Drähte, wobei mit den hier dargestellten Wellenwicklungsherstellvorrichtungen 10 und den damit durchführbaren Wellenwicklungsherstellverfahren die Herstellung der Biegung in einer Ebene, durch Umbiegung aufeinanderfolgender Drahtabschnitte in entgegengesetzte Biegungsrichtungen erfolgt. Eine derartige Herstellart ist insbesondere bei Profildrähten, die eine von einer runden Form abweichende Querschnittsprofilform, beispielsweise Rechteckprofil aufweisen, vorteilhaft. Die Drähte sind z.B. aus Kupferdraht mit Rechteckprofil gebildet. Insbesondere sind die Drähte mit einer äußeren Isolierschicht zur elektrischen Isolation versehen, die beim Biegen unversehrt bleiben soll. Die Wicklungen aus Wellenwicklungsdrähten und Wickelmatten unterscheiden sich von sogenannten Schwertwicklungen, bei denen eine Spulenwicklung durch Aufwickeln auf eine längliche Rechteckform (Schwert) erfolgt, und den daraus gebildeten (Schwert-)Wicklungsmatten dadurch, dass die Drähte nicht spiralartig bzw. wendelförmig gebogen werden, sondern flach gebogen werden. Eine Wickelmatte umfasst insbesondere mehrere sich in einer Längsrichtung erstreckende wellenförmig gebogene Wellenwicklungsdrähte, die in Längsrichtung beabstandete und sich in einer quer zur Längsrichtung verlaufenden Querrichtung erstreckende geradlinige Drahtabschnitte und dachförmige Wicklungsköpfe dazwischen derart aufweisen, dass benachbarte geradlinige Drahtabschnitte durch einen dachförmig gebogenen Wicklungskopf miteinander verbunden sind.

Die geradlinigen Drahtabschnitte der Wickelmatte dienen insbesondere dazu, in Nuten eines Gehäuses eines Bauteils einer elektrischen Maschine, wie insbesondere einem Stator eines Elektromotors, eingefügt zu werden. Die Wicklungsköpfe bilden jeweils einen Umschlag und stehen außen an den axial gerichteten Gehäuseenden vor und verbinden den Drahtabschnitt einer Nut mit einem Drahtabschnitt in einer anderen Nut. Insgesamt lässt sich so durch eine oder vorzugsweise mehrere Wickelmatten die Spulenwicklung des Bauteils der elektrischen Maschine bilden. Beispielsweise soll eine dreiphasige Spulenwicklung hergestellt werden. Die hier näher erläuterten Wellenwicklungsherstellvorrichtungen 10 und die damit durchführbaren Verfahren befassen sich mit dem Schritt des Herstellens eines derartigen wellenartig gebogenen Drahtes, die auf unterschiedliche Weise - insbesondere Stapeln, Stecken oder Flechten - zu einer Wicklungsmatte zusammengesetzt werden können.

Gemäß den beigefügten Figuren weist die Wellenwicklungsherstellvorrichtung 10 einen Linearführungsmechanismus 12 und eine Kette oder Reihe von Formelementen 14.1, 14.2 auf.

In den Figuren ist die Wellenwicklungsherstellvorrichtung 10 zu Darstellungszwecken vereinfacht mit nur drei Formelementen 14.1, 14.2 dargestellt. Mit drei aufeinanderfolgenden Formelementen lässt sich eine "Welle" mit einem in einer ersten Richtung weisenden ersten Wicklungskopf und mit einem in die andere Richtung weisenden zweiten Wicklungskopf bilden. Es sollte klar sein, dass in der Praxis je nach Länge des Wellenwicklungsdrahtes und Anzahl von herzustellenden Wicklungsköpfen eine entsprechend bedeutend größere Anzahl von Formelementen 14.1, 14.2 vorgesehen ist.

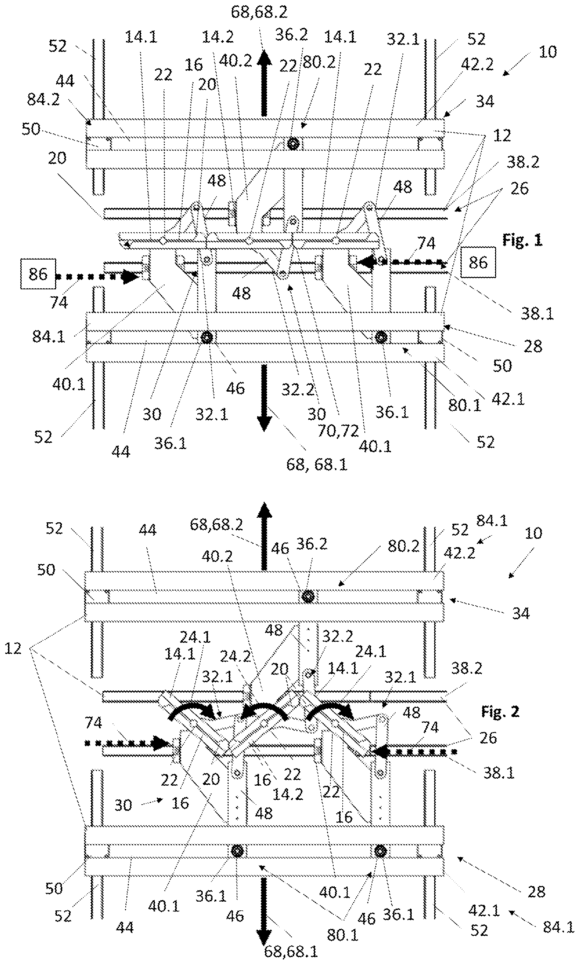

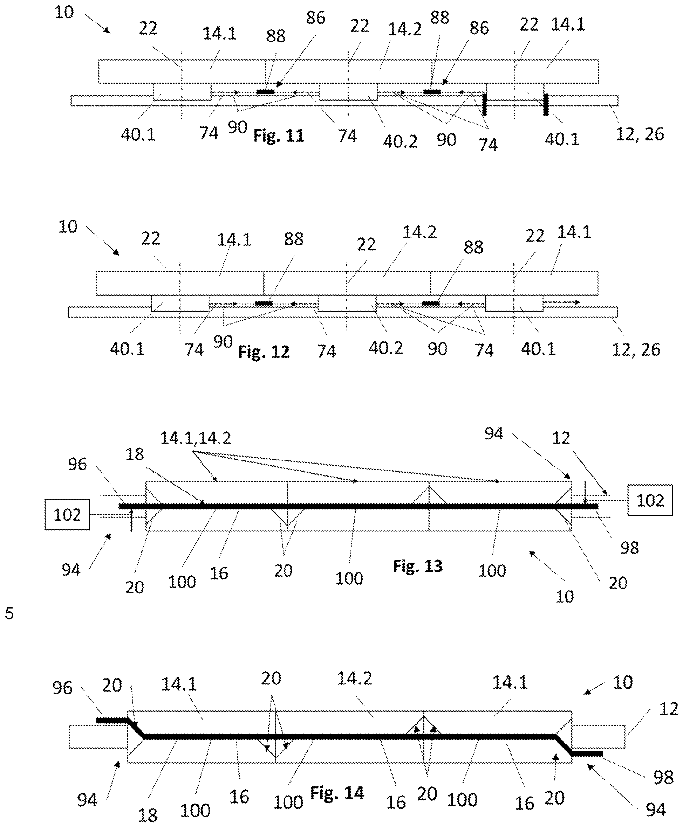

Wie man insbesondere den Fig. 1 bis 5 entnehmen kann, weist jedes Formelement 14.1, 14.2 jeweils eine Halterung 16 zum Halten eines geradlinigen Drahtabschnitts eines zu biegenden Drahts 18 (ein Beispiel ist in Fig. 12 und 13 dargestellt) und eine Biegeform 20 zum Formen eines Wellenwicklungskopfbereichs zwischen den geradlinigen Drahtabschnitten auf.

Wie dies grundsätzlich aus [4] bekannt ist, auf die für weitere Einzelheiten verwiesen wird, kann die Halterung 16 durch eine Nut in dem Formelement 14.1, 14.2 gebildet sein, die den Draht 18 beidseitig begrenzt und somit beim Biegen fixiert. Die Biegeform 20 ist zum Formen des Wicklungskopfes ausgebildet und kann je nach Dimensionierung und Form des Wicklungskopf - auch von Formelement 14.1 zu Formelement 14.2 in der Formelement-Kette - ebenfalls unterschiedlich ausgebildet sein.

Die Formelemente 14.1, 14.2 sind auf dem Linearführungsmechanismus 12 relativ zueinander linear bewegbar und um jeweils eine Drehachse 22 drehbar gelagert.

In Fig. 1 ist eine Grundstellung dargestellt, in der die Halterungen 16 der Formelemente 14.1, 14.2 zueinander ausgerichtet sind. In dieser Grundstellung wird der Draht 18 wie in Fig. 12 dargestellt eingefügt.

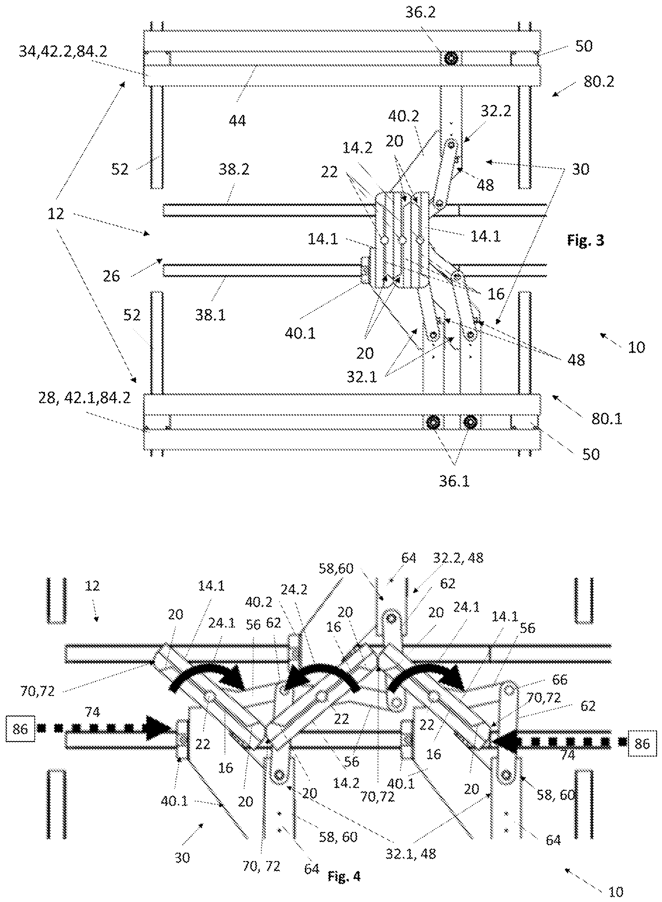

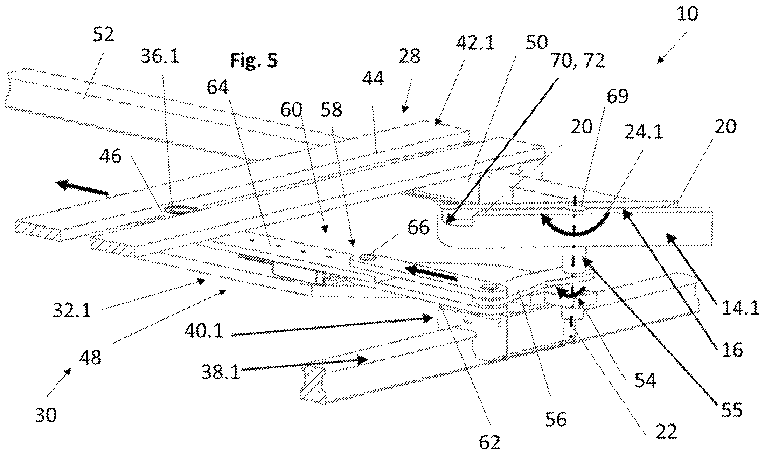

Fig. 2 zeigt eine Zwischenstellung der Wellenwicklungsherstellvorrichtung 10, während Fig. 3 eine Endposition der Wellenwicklungsherstellvorrichtung 10 zeigt. Fig. 4 zeigt eine vergrößerte Darstellung der Formelemente 14.1, 14.2 aus Fig. 2. Fig. 5 zeigt eine Einheit aus einem der Formelemente 14.1 zusammen mit einem Wandler 32.1 zum Antreiben einer Drehbewegung des Formelements 14.1.

Wie man der Folge der Fig. 1 bis 3 entnehmen kann, sind die Formelemente 14.1, 14.2 auf dem Linearführungsmechanismus 12 derart gelagert, dass sich aus der Grundstellung heraus jeweils benachbarte Formelemente 14.1, 14.2 gegensinnig zueinander drehen und sich die Formelemente 14.1, 14.2 dabei mit ihren Drehachsen 22 zueinander annähern.

So wird beim Verdrehen und Annähern, wie dies grundsätzlich aus [4] bekannt ist, aus dem in den Halterungen 16 gehaltenen Draht 18 der mäanderförmige Wellenwicklungsdraht mit geradlinigen Drahtabschnitten und dachförmigen Wellenwicklungsköpfen dazwischen gebildet.

Wie in den Fig. 1 bis 5 dargestellt, weist bei einigen Ausführungsformen der Linearführungsmechanismus 12 eine erste Linearführung 26 und eine zweite Linearführung 28 auf, deren Abstand zueinander veränderbar ist.

Gemäß den Fig. 1 bis 5 weisen einige Ausführungsformen der Wellenwicklungsherstellvorrichtung 10 weiter einen Wandlermechanismus 30 auf. Der Wandlermechanismus 30 ist zum Umsetzen einer Veränderung des Abstandes der ersten Linearführung 26 und der zweiten Linearführung 28 in die Drehbewegung der Formelemente 14.1, 14.2 ausgebildet.

Bei einigen Ausführungsformen weist der Wandlermechanismus 30 pro zu drehendem Formelement 14.1, 14.2 jeweils einen Wandler 32.1, 32.2 auf, der mit dem zugeordneten Formelement 14.1, 14.2 mitbeweglich auf dem Linearführungsmechanismus 30 gelagert ist.

Die in der ersten Drehrichtung 24.1 drehenden Formelemente werden im Folgenden als erste Formelemente 14.1 bezeichnet, während die in der zweiten Drehrichtung 24.2 drehenden Formelemente im Folgenden als zweite Formelemente 14.2 bezeichnet werden. In der Reihe von Formelementen sind immer erste Formelemente 14.1 und zweite Formelemente 14.2 alternierend vorgesehen. Je ein Paar aus ersten und zweitem Formelement 14.1, 14.2 formt beim Verdrehen gemeinsam einen dachförmigen Wellenwicklungskopf.

Beispielsweise dient in den dargestellten Ausführungsformen die erste Linearführung 26 der linearen Führung der Formelemente 28, während die zweite Linearführung 28 als Verteiler zum Verteilen einer Drehkraft auf die ersten Formelemente 14.1 ausgebildet ist.

Bei einigen Ausführungen reicht es aus, wenn nur einige der Formelemente 14.1, 14.2 mittels des Wandlermechanismus 30 drehend angetrieben werden. Beispielsweise sind nur die ersten Formelemente 14.1 mittels des Wandlermechanismus 30 drehend angetrieben, während die dazwischen liegenden zweiten Formelemente 14.2 gekoppelt sind, beispielsweise in der aus [4] bekannten Art mit Verzahnungen und/oder Wälzkurven und/oder sonstigen Steuerkurven und Steuerkurvenfolgeelementen, über die sie miteinander in Eingriff sind.

Bei bevorzugten Ausführungen, wie in Fig. 1 bis 5 dargestellt, weist die Reihe von Formelementen alternierend die ersten und zweiten Formelemente 14.1, 14.2 auf, wobei die zweiten Formelemente 14.2 zur gegensinnigen Drehung zu den ersten Formelementen 14.2 ausgebildet sind. Der Linearführungsmechanismus 12 weist eine dritte Linearführung 34 auf. Die erste Linearführung 26 ist zwischen der zweiten Linearführung 28 und der dritten Linearführung 34 angeordnet. Die zweite und dritte Linearführung 28, 34 sind zum Antreiben der Drehbewegung auf die erste Linearführung 26 zu und von der ersten Linearführung 26 weg bewegbar. Insbesondere ist die dritte Linearführung 34 zum Verteilen einer Drehkraft zum Antreiben der Drehbewegung auf die zweiten Formelemente 14.2 ausgebildet.

Erste Wandler 32.1 weisen zum Antreiben der Drehbewegung der ersten Formelemente 14.1 erste Abgreifelemente 36.1 auf, die linear beweglich an der zweiten Linearführung 28 gelagert sind. Zweite Wandler 32.2 weisen zum Antreiben der Drehbewegung der zweiten Formelemente 14.2 zweite Abgreifelemente 36.2 auf, die linear beweglich an der dritten Linearführung 34 gelagert sind.

Die Form der Linearführungen 26, 28, 34 kann unterschiedlich ausgebildet sein. Auch die Art, wie die Linearführungen 26, 28, 34 im Abstand zueinander verstellbar sind, kann unterschiedlich sein. Bevorzugt ist eine der Linearführungen 26, insbesondere die erste Linearführung 26 zum Führen der Linearbewegung der Formelemente 14.1, 14.2, ortsfest gehalten, beispielsweise auf einem Maschinenrahmen montiert, während die andere(n) Linearführung(en) - insbesondere die zweite Linearführung 28 und, falls vorhanden, die dritte Linearführung 34 - beweglich auf die eine Linearführung - insbesondere erste Linearführung 26 - zu und von ihr weg bewegbar sind.

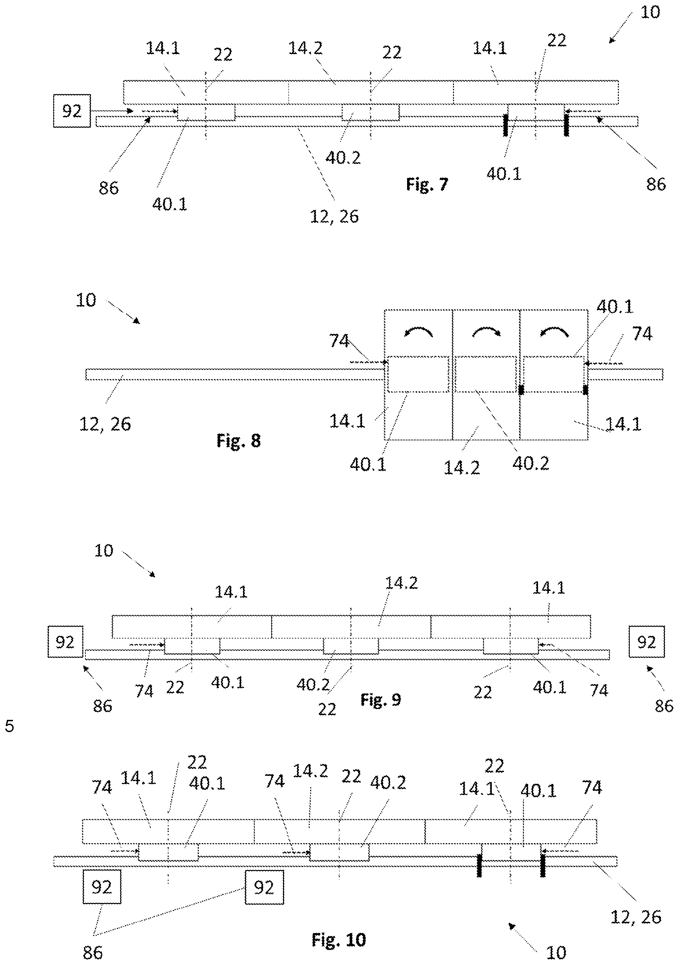

Demnach weist bei einigen Ausführungsformen die erste Linearführung 26 wenigstens eine ortsfeste Führungsschiene 38.1, 38.2 auf, auf der Führungswagen 40.1, 40.2 frei verschiebbar gelagert sind, auf denen jeweils ein Formelement 14.1, 14.2 mit seiner Drehachse 22 drehbar gelagert ist. Dies heißt nicht, dass alle Formelemente 14.1, 14.2 frei auf der ersten Linearverschiebung 26 verschiebbar sein müssen. Wie später noch anhand der Fig. 7 bis 12 erläutert, ist bei einigen Ausführungen eines der Formelemente 14.1, 14.2, insbesondere ein am Ende der Reihe von Formelementen 14.1, 14.2 angeordnetes Formelement, an der ersten Linearführung 26 festgelegt, während die anderen Formelemente 14.1, 14.2 frei linear beweglich auf der ersten Linearführung 26 gelagert sind, um sich zum Biegen des Drahtes auf dieses festgelegte Formelement zu und zum Einnehmen der Grundstellung erneut von ihm weg zu bewegen.

Bei den in Fig. 1 bis 5 dargestellten Ausführungsformen weist die erste Linearführung 26 eine erste Führungsschiene 38.1 auf, auf der erste Führungswagen 40.1 gelagert sind. Auf jeweils einem ersten Führungswagen 40.1 ist eines der ersten Formelemente 14.1 mit seiner Drehachse 22 drehbar gelagert. Die erste Linearführung 26 weist weiter eine zweite Führungsschiene 38.2 auf, auf der zweite Führungswagen 40.2 gelagert sind. Auf jeweils einem zweiten Führungswagen 40.2 ist eines der zweiten Formelemente 14.2 mit seiner Drehachse 22 drehbar gelagert.

Bei einigen Ausführungsformen weist die zweite Linearführung 28 und/oder - falls vorhanden - die dritte Linearführung 34 jeweils eine Verteilerschiene 42.1, 42.2 auf, die quer zur Erstreckung der wenigstens einen Führungsschiene 40.1, 40.2 verschiebbar gelagert ist.

Wie man insbesondere Fig. 5 entnehmen kann, erstrecken sich Führungen 52 zum Verschieben der jeweiligen Verteilerschiene 42.1, 42.2 von der ersten Linearführung 26 weg in einer Richtung quer zur Erstreckung der ersten Linearführung 26. Die Verteilerschiene 42.1, 42.2 ist auf einem Verteilerschienenwagen 50 angeordnet, der auf diesen Führungen 52 fährt.

Bei der Ausgestaltung der Fig. 1 bis 5 weist die zweite Linearführung 28 eine erste Verteilerschiene 42.1 mit einem Schlitz 44 oder einer Nut auf, in der Rollen 46 der ersten Abgreifelemente 36.1 verschiebbar aufgenommen sind. Die dritte Linearführung 34 weist eine zweite Verteilerschiene 42.1 mit einem entsprechenden Schlitz 44 oder Nut auf, in der Rollen 46 der zweiten Abgreifelemente 36.2 verschiebbar aufgenommen sind.

Insbesondere sind bei der ersten und zweiten Verteilerschiene 42.1, 42.2 auf dem Verteilerschienenwagen 50 zwei Balken 54 angeordnet, zwischen denen der jeweilige Schlitz 44 zur Aufnahme der Rollen 46 oder der sonstigen Abgreifelemente 36.1, 36.2 ausgebildet ist.

Die Umsetzung der Änderung des Abstandes von Linearführungen 26, 28, 34 in Drehbewegungen kann mittels jedem geeigneten Getriebe erfolgen. Die Umsetzung erfolgt bevorzugt mechanisch, so dass keine Anschlüsse an die bewegten Formelemente 14.1, 14.2 oder deren Führungen angeschlossen werden müssen. Damit können die im Folgenden noch näher erläuterten Vorteile einfach und prozesssicher erreicht werden, und es können hohe Geschwindigkeiten für kurze Taktzeiten bei einer industriellen Großserienfertigung erzielt werden.

Bei einigen Ausführungsformen weisen die Wandler 32.1, 32.2 Hebelkinematiken 48 zum Umsetzen der Bewegung der Linearführungen 26, 28, 34 zueinander und voneinander weg in eine Drehbewegung der zugeordneten Formelemente 14.1, 14.2 auf. Ein Ausführungsbeispiel für eine derartige Hebelkinematik 48 zum Bilden eines Wandlers 32.1 ist in Fig. 5 dargestellt.

In Fig. 5 ist eine erste Einheit aus erstem Formelement 14.1, erstem Führungswagen 40.1, erster Führungsschiene 38.1 und zugeordnetem ersten Wandler 32.1 mit der ersten Verteilerschiene 42.1 dargestellt. Eine entsprechende zweite Einheit aus zweitem Formelement 14.2, zweitem Führungswagen 40.2, zweiter Führungsschiene 38.2, zweitem Wandler 32.2 und zweiter Verteilerschiene 42.2 ist entsprechend spiegelsymmetrisch hierzu ausgebildet und daher nicht erneut dargestellt. Gemäß Fig. 5 ist der Führungswagen 40.1 auf der zugeordneten Führungsschiene 38.1 frei verschiebbar gelagert. Auf dem Führungswagen 40.1 ist ein Drehlager 54, beispielsweise mit einem Drehstift, zum verdrehbaren Lagern des Formelements 14.1 vorgesehen. Das Formelement 14.1 ist drehfest (z.B. mit einer drehsteifen Verbindung 55) mit einem Ausleger 56 verbunden. Das freie Ende des Arms des Auslegers 56 ist mit einer Hebeleinheit 58 verbunden, an deren anderen Ende das Abgreifelement 36.1, hier mit der Rolle 46, angeordnet ist. Die Hebeleinheit 58 kann eine oder mehrere Hebelstangen aufweisen. Bei der dargestellten Ausführung weist die Hebeleinheit 58 einen Kniehebel 60 mit einem ersten Kniehebelarm 62, einem zweiten Kniehebelarm 64 und einem Knickgelenk 66 dazwischen auf. Der erste Kniehebelarm ist mit dem einen Ende an den Ausleger 56 angelenkt und mit dem anderen Ende mittels des Knickgelenks 66 an den zweiten Kniehebelarm 64 angelenkt. Der zweite Kniehebelarm 64 ist in Richtung quer zur Verfahrbewegung des Führungswagens 40.1 an dem Führungswagen 40.1 linear verschiebbar gelagert, und weist an seinem dem Knickgelenk 66 abgewandten Ende das Abgreifelement 36.1 auf.

Bewegt sich die zweite Linearführung 28 von der ersten Linearführung 26 weg, so wird die Hebeleinheit 58 mit gezogen und verdreht mittels des Auslegers 56 das angeschlossene Formelement 14.1.

Einige Ausführungsformen weisen einen Aktuator 68 zum Verändern des Abstands der Linearführungen des Linearführungsmechanismus auf. Bei einigen Ausführungen ist hierzu ein erster Aktuator 68.1 zum Antreiben der Bewegung der zweiten Linearführung 28 und ein mit dem ersten Aktuator 68.1 gekoppelter oder synchronisierter zweiter Aktuator 68.2 zum Antreiben der Bewegung der dritten Linearführung 34 vorgesehen. Bei anderen Ausführungsformen ist ein Kopplungsmechanismus zum Koppeln des Aktuators 68 an die zweite Linearführung 26 und die dritte Linearführung 34 vorgesehen. Beispielsweise kann der Aktuator 68, 68.1, 68.2 einen vorzugsweise elektromechanisch wirkenden Zylinder aufweisen, wobei die Zylinderbewegung durch ein geeignetes Getriebe auf die Linearführungen übertragen wird, oder es können gekoppelte Zylinder vorgesehen sein.

Wie man insbesondere den Fig. 4 und 5 entnehmen kann, sind die benachbarten Formelemente 14.1, 14.2 nicht unmittelbar miteinander verbunden, vielmehr sind die Formelemente 14.1, 14.2 einzeln austauschbar an dem Linearführungsmechanismus 12 gelagert. Hierzu sind die Formelemente 14.1, 14.2 drehbar auf den Drehstift aufgesetzt und beispielsweise mit einer lösbaren Schraube 69 befestigt.

Die Formelemente 14.1, 14.2 sind frei relativ zueinander verschiebbar auf dem Linearführungsmechanismus 12 gelagert. Benachbarte Formelemente 14.1, 14.2 sind über wenigstens eine mechanische Steuerkurve 70 miteinander derart in Eingriff, dass die relative Verschiebung der Formelemente 14.1, 14.2 zueinander über die Drehung der Formelemente 14.1, 14.2 angetrieben wird.

Dies kann über verschieden ausgebildete Steuerkurven 70 erfolgen. Beispielsweise könnte jeweils das erste Formelement 14.1 mit einer Steuerkurve versehen sein, und das benachbarte zweite Formelement hat ein Steuerkurvenfolgeelement, beispielsweise eine Rolle oder einen Gleitstift oder dergleichen, das die Steuerkurve 70 kontaktiert und daran entlang fährt, um die Verschiebebewegung des zweiten Formelements 14.2 relativ zu dem ersten Formelement 14.2 anzutreiben.

Bei den dargestellten Ausführungen sind, wie dies insbesondere in Fig. 4 und 5 zu sehen ist, benachbarte Formelemente 14.1, 14.2 dazu ausgebildet, während der Drehbewegung gegenseitig auf einer Wälzkurve 72 als Steuerkurve 70 abzurollen. Insbesondere sind an beiden Enden der Formelemente 14.1, 14.2 jeweils Wälzkurven 72 vorgesehen, die derart ausgebildet sind, dass sich die benachbarten Formelemente 14.1, 14.2 während der gesamten Drehbewegung zum Formen des Wellenwicklungsdrahtes auf ihren Wälzkurven 72 aneinander abstützen. Die Formelemente 14.1, 14.2 werden mittels der Hebelkinematiken 48 zum Drehen angetrieben und verbiegen den Draht 18. Durch den Widerstand beim Biegen entsteht eine Presskraft 74, mit der sich die Formelemente 14.1, 14.2 über ihre Wälzkurven 72 aufeinander abstützen. Durch die Presskraft 74 und unter Abrollen über die Wälzkurven 72 werden die Formelemente 14.1, 14.2 auf dem Linearführungsmechanismus 12 aus der in Fig. 1 gezeigten Grundstellung in die in Fig. 3 gezeigte Endposition bewegt.

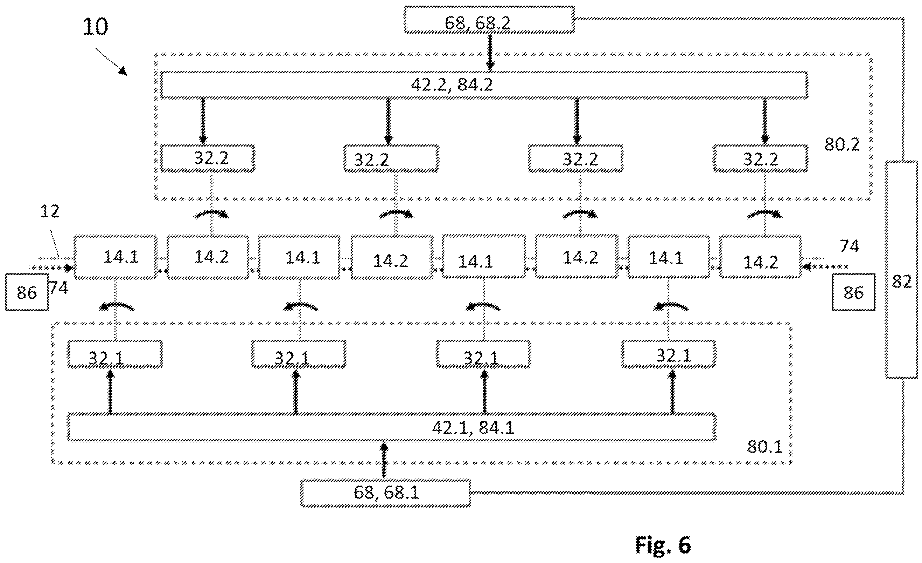

In Fig. 6 ist ein schematisches Blockschaltbild für bevorzugte Ausführungsformen der Wellenwicklungsherstellvorrichtung 10 dargestellt, anhand dessen im Folgenden besondere Funktionen und Vorteile der Ausführungen mit relativ zueinander bewegliche Linearführungen erläutert werden.

Bisher ist zur Herstellung der Wellenwicklungsdrähte gemäß [4] eine Synchronisation der Bewegung der Formelemente durch Antrieb eines der Formelemente und Verzahnung jeweils benachbarter Formelemente durchgeführt worden. Eine derartige in [4] beschriebene "Reihenschaltung" der Formelemente führt zu hohen Kräften an der Verzahnung des Formelementes, an dem die Bewegung eingeleitet wird. Diese Kräfte werden beim zeitgleichen Biegen mehrerer Drähte und einer hohen Anzahl an Formelementen weiter steigen, wodurch die Gefahr des mechanischen Versagens oder Überspringen der Verzahnung besteht. Ebenso ist bei einem derartigen Vorgehen die Verdrehung der Formelemente durch die Aufsummierung der Fertigungstoleranzen nicht exakt synchronisiert. So stellt sich an den Formelementen des einleitenden Führungswagens ein größerer Drehwinkel ein, als am gegenüberliegenden Ende der Formelement-Kette. Darüber hinaus wird die Flexibilität der bekannten Wellenwicklungsherstellvorrichtungen anhand der für die Übertragung der Drehbewegung notwendigen Verzahnung erheblich eingeschränkt. Die Verzahnung hängt zusammen mit der Wälzkurve vor allem von der Geometrie des Drahtes ab. Somit führen selbst geringfügige Änderungen und Optimierungen der Drahtkontur zu aufwendigen konstruktiven Anpassungen im Bereich der Verzahnung. Neben den Kosten und dem Ressourcenbedarf zur Neukonstruktion oder Anpassung der Verzahnung, sind der einhergehende Fertigungsaufwand und die Fertigungszeiten, die ebenfalls bei jeder Änderung der Formelemente auch für die Verzahnung anfallen, negativ zu bewerten.

Die Komplexität liegt in der Vielzahl der Parameter, die sich auf die Kontur der Formelemente 14.1, 14.2 auswirken. In Abhängigkeit der Statorgeometrie und des Wickelschemas besteht die Möglichkeit, dass sich jedes Formelement 14.1, 14.2 der Kette von den anderen unterscheidet. Des Weiteren können sich beim Einfahren des Prozesses einzelne Formelemente 14.1, 14.2 unabhängig von den anderen ändern und sollten daher nicht mit der Grundkinematik oder der Synchronisation zusammenhängen. Ferner ergibt sich bei [4] aus dem gegenseitigen Abrollen entlang der Wälzkurve eine nichtlineare Längsbewegung der Formelemente 14.1, 14.2 zueinander. Somit sind die einzelnen Längsbewegungen einerseits sehr aufwendig zu synchronisieren, andererseits hängen diese von der Wälzkurve und somit von der Kontur des Formelementes ab.

Im Gegensatz dazu wird bei Ausführungen der hier dargestellten Wellenwicklungsherstellvorrichtung 10 die Rotation der Formelemente 14.1, 14.2 gerade nicht durch die Einleitung einer oder mehrerer Längsbewegungen gesteuert. Somit müssen die nichtlinearen Bewegungskurven nicht nach jeder Änderung eines Formelementes 14.1, 14.2 erneut unter hohem Aufwand berechnet und programmiert werden.

Ausführungsformen der Wellenwicklungsherstellvorrichtung 10 besitzen eine reversible Grundkinematik 80.1, 80.2, die nicht von der sich ändernden Kontur des Formelementes 14.1, 14.2 abhängt und von der linearen Position der Formelemente 14.1, 14.2 unabhängig agiert. Gleichzeitig lässt sich ein synchronisiertes Rotieren aller Formelemente 14.1, 14.2 sicherstellen. Dabei wird die Funktion des Synchronisierens dem Formelement 14.1, 14.2 entnommen und in die unabhängige Grundkinematik 80.1, 80.2 integriert. Es wird eine frühzeitige Aufteilung der eingeleiteten Kräfte innerhalb der Grundkinematik 80.1, 80.2 realisiert. Dies hilft dabei, die Kraftspitzen am Formelement 14.1, 14.2 gering zu halten.

Es lassen sich kostengünstige Formelemente 14.1, 14.2 einsetzen, die auf der Grundkinematik 80.1, 80.2 montiert und bei Änderungen ausgetauscht werden können, ohne dabei die Kinematik zu beeinflussen.

Die hier dargestellten Ausgestaltungen der Wellenwicklungsherstellvorrichtung 10 weisen eine Grundkinematik 80.1, 80.2 in Form von im Abstand veränderlichen Linearführungen 26, 28, 34 mit einem Wandlermechanismus 30 zum Umwandeln der Abstandsänderung in Drehbewegungen der Formelemente 14.1, 14.2 auf.

Im Anschluss an das Fixieren des Drahtes in den Halterungen 16 wird die winkelsynchrone Rotation der Formelemente 14.1, 14.2 anhand der vom Formelement 14.1, 14.2 unabhängigen Grundkinematik 80.1, 80.2 initiiert und fortlaufend gesteuert. Die Grundkinematik 80.1, 80.2 verteilt die Kraft zur Rotation gleichmäßig mithilfe einer Parallelschaltung und überträgt die einzelnen Kräfte synchron auf die jeweiligen Formelemente 14.1, 14.2. Der Mechanismus ermöglicht eine Art Freilauf in Längsrichtung - Richtung der durch Linearführung geführten Linearbewegung -, wodurch die Rotation der Formelemente 14.1, 14.2 unabhängig von deren Position erfolgt.

Die Ansteuerung zur Auslenkung der Formelemente 14.1, 14.2 erfolgt anhand einer elektrischen, mechanischen, hydraulischen, pneumatischen oder daraus kombinierten Eingangsgröße - insbesondere über Ansteuerung des entsprechenden Aktuators 68, 68.1, 68.2. Die Eingangsgröße die beispielsweise über gekoppelte Aktuatoren 68.1, 68.2, einen Aktuator 68 mit Kopplungsmechanismus oder eine Steuerung 82 beidseitig gekoppelt/ synchronisiert ist, wird über einen Verteiler 84.1, 84.2 synchron auf den jeweiligen Wandler 32.1, 32.2 übertragen. Der Wandler 32.1, 32.2 übersetzt die Eingangsgröße in ein Drehmoment, das auf das jeweilige Formelement 14.1, 14.2 übertragen wird und zum gegensinnigen winkelsynchronen Eindrehen führt. Der insbesondere durch die jeweilige Verteilerschiene 42.1, 42.2 gebildete Verteiler 84.1, 84.2 verfügt über eine freie Linearführung, sodass die einzelnen Wandler 32.1, 32.2 in Längsrichtung voneinander unabhängig verschoben werden können.

Mithilfe des winkelsynchronen gegensinnigen Rotierens der Formelemente 14.1, 14.2 zueinander wird der Draht wie grundsätzlich bereits in [4] beschrieben in der Ebene gebogen (Flachwicklung). Anhand der Führung eines jeden Formelementes 14.1, 14.2 kann die nichtlineare Längsbewegung, die aus der winkelsynchronen Rotation der Formelemente 14.1, 14.2 entsteht, einfach automatisch ausgeglichen werden.

Wie in [4] beschrieben führt auch hier das gegenseitige Abrollen entlang der Wälzkurve 72 zu einer kontinuierlichen Spannung im Draht 18.

Die Fig. 6 verdeutlicht die Verteilung und Wandlung des Eingangssignals über die Grundkinematik, wodurch diese Prozesse unabhängig von der Kontur des Formelementes 14.1 14.2 erfolgen. Ein Vorteil liegt in der Flexibilität des Konzeptes, da geometrische Änderungen an den Formelementen 14.1, 14.2 durchgeführt werden können, ohne dass die Grundkinematik 80.1, 80.2 konstruktiv angepasst und erneut gefertigt werden muss.

Außerdem werden im Vergleich zu [4] die Formelemente 14.1, 14.2 durch den Entfall der Verzahnung deutlich kosteneffizienter. Einerseits wird der zeitliche Bedarf zur Anpassung der Konstruktion und Fertigung entscheidend reduziert, anderseits kann auf kosten- und zeitintensive Fertigungsverfahren, die mit einer gehärteten Verzahnung einhergehen, verzichtet werden. Zudem können die Formelemente 14.1, 14.2 im Falle einer konstruktiven Änderung mit den Bestehenden ausgetauscht werden, indem diese auf die bestehende Grundkinematik 80.1, 80.2 aufgesteckt werden.

In [4] ist die Rotation der Formelemente 14.1, 14.2 das Resultat einer nichtlinearen Längsbewegung, die an den Führungswagen über einen Aktuator eingeleitet wird. Im Gegensatz hierzu sehen die hier dargestellten Ausgestaltungen der Wellenwicklungsherstellvorrichtung 10 eine von der Position des Formelementes 14.1, 14.2 unabhängige synchrone Einleitung des Drehwinkels vor. Die nichtlineare Längsbewegung resultiert aus der Rotation und wird über den Linearführungsmechanismus 12 ausgeglichen. Daher kann die genaue Bewegungsgleichung unbekannt bleiben und muss weder berechnet noch programmiert werden. Dies vereinfacht die Steuerung der Aktuatoren 68, 68.1, 68.2, da diese nun lineare und keine nichtlinearen Bewegungen oder Kräfte einleiten. Des Weiteren ist die Steuerung von der Kontur des Formelementes 14.1, 14.2 unabhängig, wodurch ein einmaliges Programmieren der Steuerung 82 ausreichend ist. Somit können Änderungen am Formelement 14.1, 14.2 schneller am Prototyp getestet und Serienanlagen schneller an neue Statoren angepasst werden.

Bei den dargestellten Ausgestaltungen der Wellenwicklungsherstellvorrichtung 10 erfolgt die Ansteuerung anhand eines vorzugsweise elektromechanischen Aktuators 68, 68.1, 68.2. Die eingeleitete Kraft wird über wenigstens eine Verteilerschiene 42.1, 42.2 synchron auf die Hebelkinematik 48 eines jeden Formelementes 14.1, 14.2 übertragen. Die Hebelkinematik 48 stellt hier den Wandler 32.1, 32.2 aus Fig. 6 dar und übersetzt die eingeleitete Kraft in ein Drehmoment, das auf das entsprechende Formelement 14.1, 14.2 übertragen wird. Mithilfe des Linearführungsmechanismus 12 sowie der Nut 44 in der Verteilerschiene 42.1, 42.2 erfolgen die Einleitung des Drehmomentes und die Synchronisierung unabhängig von der Position des Formelementes 14.1, 14.2. Gleichzeitig kann anhand der separaten Führung eines jeden Formelementes 14.1, 14.2 die nichtlineare Längsbewegung, die aus der Rotation der Formelemente 14.1, 14.2 entsteht, ausgeglichen werden.

Wie in [4] beschrieben führt auch hier das gegenseitige Abrollen entlang der Wälzkurve 72 zu einer kontinuierlichen Spannung im Draht 18. Allerdings ist die Hebelkinematik 48 unabhängig von der Geometrie des Formelementes 14.1, 14.2 und steigert dadurch die Änderungsfreundlichkeit.

Bei einigen Ausführungsformen wird, um den Kontakt zwischen den Formelementen 14.1, 14.2 auch im Leerlauf herzustellen, eine Kraft (Presskraft) in Längsrichtung der Linearführung 26 der Formelemente 14.1, 14.2 eingeleitet. Außerdem hat die zusätzliche Kraft in Längsrichtung den Vorteil, dass sie beim Biegeprozess unterstützen kann und dadurch die die Rollwiderstände der Führungswagen kompensiert.

Mögliche Ausgestaltungen zum Einleiten der Presskraft werden im Folgenden anhand der Figuren 7 bis 12 erläutert.

Gemäß den in den Fig. 6 bis 12 dargestellten Ausführungsformen weist die Wellenwicklungsherstellvorrichtung 10 eine Presskrafteinleiteinrichtung 86 auf, die dazu ausgebildet ist, beim Zusammenfahren und/oder beim Auseinanderfahren der Formelemente 14.1, 14.2 eine Presskraft 74 zur Aufrechterhaltung der Abstützung benachbarter Formelemente 14.1, 14.2 über die Wälzkurve 72 einzuleiten.

Die Presskrafteinleiteinrichtung 86 ist bei einigen Ausführungsformen, wie beispielsweise in Fig. 7 bis 10 dargestellt, dazu ausgebildet, eine von der Drehrichtung der Formelemente 14.1, 14.2 unabhängige Kraft an einen auf dem Linearführungsmechanismus 12 beweglichen Führungswagen 40.1, 40.2 wenigstens eines äußeren Formelements 14.1, 14.2 der Reihe von Formelementen 14.1, 14.2 einzuleiten.

Bei einigen Ausführungsformen, wie insbesondere in Fig. 9, 11 und 12 dargestellt, ist die Presskrafteinleiteinrichtung 86 zum Einleiten einer Presskraft 74 durch aufeinander zu Bewegen mehrerer Formelemente ausgebildet ist.

Bei einigen Ausführungsformen, wie insbesondere in Fig. 11 und 12 dargestellt, weist die Presskrafteinleiteinrichtung 86 wenigstens eine vorzugsweise elastische Spanneinrichtung 88 zur Einleitung einer Spannkraft 90 zum Zusammenspannen benachbarter Formelemente 14.1, 14.2 auf.

Ausgestaltungen der Wellenwicklungsherstellvorrichtung 10, wie sie beispielsweise in den Fig. 7 bis 12 gezeigt sind, weisen einen Mechanismus zur linearen Positionierung der Formelemente 14.1, 14.2 auf. Der Mechanismus zur linearen Positionierung hat insbesondere den Effekt, dass eine anfängliche Einrichtung der Wellenwicklungsherstellvorrichtung, ein Einfahren und/oder ein Rückfahren auch "im Leerlauf", also insbesondere ohne eingefügten Draht 18, einfach ermöglicht ist.

So ist beispielsweise der in [4] beschriebene Formschluss der dortigen Verzahnung beim Zusammenfahren nur dann gegeben, wenn die Formelemente mit mindestens einem Draht bestückt sind. Ein gleicher Effekt ergibt sich bei Ausführungsformen der hier vorliegenden Wellenwicklungsherstellvorrichtung gemäß den Fig. 1 bis 6 mit den Wälzkurven 72 oder einer sonstigen Abstützung über sonstige Steuerkurven 70. Der Draht 18 schränkt einen weiteren Freiheitsgrad der Formelemente 14.1, 14.2 ein, sodass die Wälzkurven 72 aneinander gepresst - und im Fall des Stands der Technik nach [4] die eingreifenden Zähne - nicht aneinander abgleiten können. Die für das Zusammenfahren eingeleitete Längskraft führt zu einer Relativkraft zwischen den Wälzkurven 72. Diese Relativkräfte führen bei den hier beschriebenen Ausführungsformen der Wellenwicklungsherstellvorrichtung 10 zur jeweiligen Verschiebung der Formelemente. Entfällt der Draht, wie beispielsweise bei einem Leerlaufbetrieb, können benachbarte Formelemente 14.1, 14.2 außer Eingriff gelangen, wodurch die kinematische Kopplung unterbrochen und ein synchronisiertes Bewegen gestört wird.

Der Sachverhalt wird auch bei einem leeren Anfahren der Ausgangsposition im Anschluss an den letzten Formschritt, wie insbesondere dem Gegenbiegen und nach Entnahme des gebogenen Wellenwicklungsdrahts deutlich. Durch das Einleiten einer Kraft am Führungswagen 40.1, 40.2 eines äußeren Formelementes 14.1, 14.2 geraten die Formelemente 14.1, 14.2 außer Eingriff, wobei insbesondere der Kontakt zwischen den Wälzkurven 72 entfällt. Dadurch entfällt sowohl die kinematische Kopplung zwischen den benachbarten Formelementen 14.1, 14.2 als auch die Kopplung zwischen der Rotation und der linearen Bewegung eines einzelnen Formelementes 14.1, 14.2, da diese auf den Relativkräften zwischen den Wälzkurven 72 beruht. Folglich ist ein automatisiertes Anfahren der Ausgangsposition rein mit dem Kontakt über Wälzkurven 72 ohne weitere Maßnahmen schwierig.

Wie oben beschrieben kann die Flexibilität der Formelemente 14.1, 14.2 mithilfe einer Grundkinematik 80.1, 80.2 gesteigert werden, die die Rotation unabhängig von der linearen Position der Formelemente 14.1, 14.2 steuert. Der lineare Ausgleich / Freilauf führt allerdings auch zu einer Entkopplung der Formelemente 14.1, 14.2 entlang der Längsrichtung. Dadurch wird besonders das Anfahren der Ausgangsposition erschwert, da die Grundkinematik 80.1, 80.2 lediglich eine synchronisierte Winkelstellung garantiert, aber die Formelemente 14.1, 14.2 nicht linear positioniert.

Einige Ausführungsformen der Wellenwicklungsherstellvorrichtung 10, wie insbesondere in den Fig. 7 bis 12 dargestellt, umfassen einen Mechanismus, der mit möglichst wenig Aktuatoren eine bestimmte Anzahl an Formelementen 14.1, 14.2 zueinander positioniert. Die Positionierung kann dabei mit und ohne Draht sowie beim Auseinander- als auch beim Zusammenfahren der Formelemente 14.1, 14.2 zuverlässig erfolgen. Bevorzugt hängt der Mechanismus nicht von der Anzahl der Formelemente 14.1, 14.2, der Geometrie der Formelemente 14.1, 14.2, der Bewegungskurven oder den Abständen zwischen den Formelementen 14.1, 14.2 ab, so dass die Flexibilität der Grundkinematik 80.1, 80.2 nicht eingeschränkt wird.

Bei Ausführungsformen der Wellenwicklungsherstellvorrichtung 10 erfolgt aufgrund der zahlreichen Anforderungen hinsichtlich der Flexibilität anhand der Formelemente 14.1, 14.2 selbst mithilfe der bereits im Prinzip in der [4] beschriebenen Wälzkurven 72. Bei Ausführungen der Wellenwicklungsherstellvorrichtung 10 ist eine Kopplung der Formelemente 14.1, 14.2 durch das Einleiten einer externen Kraft - Presskraft 74 - oder eines externen Hubes geschaffen, die/der die Wälzkurven 72 der benachbarten Formelemente 14.1, 14.2 sowohl beim Auseinander- als auch beim Zusammenfahren aneinander presst. Dadurch werden die Formelemente 14.1, 14.2 ausschließlich in Abhängigkeit der Winkelstellung positioniert.

Um den Kontakt zwischen den Formelementen 14.1, 14.2 sowohl im Leerlauf als auch beim Auseinanderfahren in Richtung der Ausgangsstellung zu garantieren, wird bei einigen Ausführungsformen der Wellenwicklungsherstellvorrichtung 10 beispielsweise eine von der Rotationsrichtung unabhängige Kraft bzw. ein unabhängiger Hub an den Führungswagen 40.1, 40.2 der äußeren Formelemente 14.1, 14.2 eingeleitet. Die Kraft bzw. der Hub sind so groß zu wählen und auszurichten, dass die Wälzkurven 72 aller benachbarten Formelemente 14.1, 14.2 sowohl beim Auseinander- als auch beim Zusammenfahren kontinuierlich aneinander gepresst und ein dauerhafter Kontakt sichergestellt wird. Eine Obergrenze für die Kraft wird dadurch bestimmt, dass diese beim Auseinanderfahren überwunden werden muss.

Mithilfe der eingeleiteten Längskraft bzw. des eingeleiteten Längshubes wird ein Leerlaufbetrieb und ein automatisiertes Anfahren der Ausgangsposition möglich. Die Vorteile des Leerlaufbetriebes wirken sich vor allem auf die Inbetriebnahme und die Prozessanalyse aus. So können beispielsweise die Achsen (im Sinne von Bewegungsachsen der Wellenwicklungsherstellvorrichtung 10 mit Einstellung der zugeordneten Aktoren/Begrenzungen) ohne die Verwendung eines Drahtes eingefahren werden, wodurch der Ausschuss reduziert und Kosten eingespart werden. Ebenso wird der Ausschuss reduziert, wenn erste Testläufe und Untersuchungen zu den mechanischen Verlusten innerhalb der Kinematik im Leerlauf durchgeführt werden können.

Grundsätzlich gibt es mehrere Varianten, um den Kontakt zwischen den Wälzkurven der Formelemente sicherzustellen, wobei einige davon in den Fig. 7 bis 12 dargestellt sind. Wenngleich in den Fig. 7 bis 12 nur jeweils drei Formelemente 14.1, 14.2 dargestellt sind, sollte klar sein, dass in der Praxis eine weitaus größere Anzahl von Formelementen 14.1, 14.2 in der Reihe vorgesehen sind. Die Varianten unterscheiden sich anhand der nachfolgenden Kriterien, wobei durch unterschiedliche Kombination der Kriterien weitere Varianten entstehen:
- Anzahl der Kraftangriffspunkte
- Art der Steuerung
- Bewegungsrichtung der Führungswagen 40.1, 40.2

Ein erstes Ausführungsbeispiel für die mit Presskrafteinleiteinrichtung 86 versehene Wellenwicklungsherstellvorrichtung 10 ist in den Fig. 7 und 8 dargestellt. In Fig. 7 ist die Reihe von Formelementen 14.1, 14.2 von der Seite in der Anfangsposition und in Fig. 8 von oben in der Endposition zu sehen. Zur Übersicht sind nur die ersten drei Formelemente von rechts in Fig. 7 und 8 gesehen dargestellt.

Bei dem in Fig. 7 und 8 dargestellten Ausführungsbeispiel der Wellenwicklungsherstellvorrichtung 10 wird der Führungswagen 40.1 eines außenstehenden Formelementes 14.1 (hier der rechte Führungswagen) fixiert und als Festlager betrieben. Mithilfe eines Presskraft-Aktuators 92 wird am gegenüberliegenden Ende der Formelement-Kette eine Kraft - Presskraft 74 - oder ein entsprechender Hub an dem dortigen Führungswagen 14.1 eingeleitet, woraus am Festlager die Gegenkraft resultiert und die Formelemente 14.1, 14.2 aneinander gepresst werden. Dadurch führen die Formelemente 14.1, 14.2 beim Biegen des Drahtes 18 neben der Rotation eine nichtlineare Translation nach rechts aus. Durch das gegenseitige Verspannen aller Formelemente 14.1, 14.2 wird lediglich ein Aktuator als Presskraft-Aktuator 92 zur Einleitung benötigt. Dieser kann beispielsweise über eine NC-Achse mit Riementrieb oder mit einem Pneumatikzylinder und somit weg- oder kraftgesteuert realisiert werden.

Fig. 8 stellt die Formelemente 14.1, 14.2 im komprimierten Zustand dar. Um die Ausgangsposition anzufahren, wird auf jedes Formelement 14.1, 14.2 ein Drehmoment mittels der oben beschriebenen Hebelkinematik 48 übertragen. Gleichzeig leitet der Presskraft-Aktuator eine Kraft oder einen Hub am äußeren Formelement 14.1 ein, wodurch die Formelemente 14.1, 14.2 weiterhin aneinander gepresst und die Längsbewegung der Formelemente 14.1, 14.2 mit ihrer Rotation gekoppelt wird. Auf diese Weise wird jedes Formelement 14.1, 14.2 nicht nur in die ursprüngliche Winkelstellung gedreht, sondern auch an die Ausgangsposition in Längsrichtung gefahren.

Ein zweites Ausführungsbeispiel für die mit der Presskrafteinleiteinrichtung 86 versehene Wellenwicklungsherstellvorrichtung 10 wird im Folgenden anhand der Darstellung in Fig. 9 beschrieben. Bei dem zweiten Ausführungsbeispiel erfolgt die geregelte Einleitung einer Kraft oder eines Hubes an den beiden Führungswagen 14.1 der äußeren Formelemente 14.1. Dabei wirken die Kräfte oder Hübe in entgegengesetzte Richtungen und unterscheiden sich zudem hinsichtlich des Betrages. Dadurch werden zunächst die Wälzkurven 72 der Formelemente 14.1, 14.2 aneinander gepresst. Gleichzeitig kann die gesamte Formelement-Kette während des Biegens auf der Linearführung verschoben und beispielsweise in eine Gegenbiegevorrichtung zum Gegenbiegen des Drahtes (wie grundsätzlich beispielsweise aus Fig. 10 der Literaturstelle [4] bekannt) gefahren werden. Neben den oben genannten Möglichkeiten für die Realisierung eines Presskraft-Aktuators 92 zur kraft- oder weggesteuerten Einleitung kann beispielsweise auch ein Kugelgewindetrieb mit Servoantrieb zum Zusammenfahren und Auseinanderfahren der äußeren Führungswagen 40.1 eingesetzt werden.

Unabhängig von den beiden Einleitungspunkten wird die Bewegung zum Anfahren der Ausgangsposition über die Hebelkinematik 48 als Drehmoment auf das jeweilige Formelement 14.1, 14.2 übertragen, wodurch sich die Formelemente 14.1, 14.2 "entfalten". Die eingeleitete Längskraft bzw. der Längshub pressen die Formelemente 14.1, 14.2 lediglich entlang der Wälzkurven 72 aneinander. Auf diese Weise wird jedes Formelement 14.1, 14.2 nicht nur in die ursprüngliche Winkelstellung gedreht, sondern auch an die Ausgangsposition in Längsrichtung gefahren.

Ein drittes Ausführungsbeispiel für die mit Presskrafteinleiteinrichtung 86 versehene Wellenwicklungsherstellvorrichtung 10 wird im Folgenden anhand der Darstellung in Fig. 10 dargestellt. Bei dem dritten Ausführungsbeispiel wird einer der äußeren Führungswagen 40.1 fixiert und an jedem weiteren Führungswagen 40.1, 40.2 eine separate Kraft in Richtung des fixierten Führungswagens 40.1 eingeleitet, wodurch eine Gegenkraft am Festlager resultiert. Bei einer synchronisierten Krafteinleitung führt das Verspannen zu einem kontinuierlichen Kontakt der Formelemente 14.1, 14.2 entlang der Wälzkurven 72. Um die Synchronisation zu vereinfachen, sollte die Einleitung hier kraftgesteuert erfolgen. Dies ist beispielsweise über einen Gewichtsausgleich oder mehrere Pneumatikzylinder möglich.

Auch beim Anfahren der Ausgangsposition wirken die Kräfte in die dargestellten Richtungen, wodurch die Formelemente 14.1, 14.2 entlang der Wälzkurven 72 gegeneinander gepresst werden. Auf diese Weise wird jedes Formelement 14.1, 14.2 nicht nur in die ursprüngliche Winkelstellung gedreht, sondern auch an die Ausgangsposition in Längsrichtung gefahren.

Fig. 11 und 12 zeigen ein viertes und fünftes Ausführungsbeispiel für die mit Presskrafteinleiteinrichtung 86 versehene Wellenwicklungsherstellvorrichtung 10. Dabei wird der Kontakt entlang der Wälzkurve 72 über den Abstand der Führungswagen 40.1, 40.2 zueinander geregelt. Dies kann prinzipiell sowohl kraft- und/oder weggesteuert und im einfachsten Fall mithilfe von Zugfedern - Ausführungsbeispiel für die Spanneinrichtung 88 - realisiert werden. Außerdem ist sowohl eine Fixierung (Fig. 11), als auch eine geregelte Führung (Fig. 12) an einem der äußeren Führungswagen 40.1 denkbar.

Auch hier wird das Anfahren der Ausgangsposition über die Hebelkinematik 48 und das rotierende Formelement 14.1, 14.2 eingeleitet. Die eingeleitete Kraft bzw. der eingeleitete Hub führt dabei zur Verpressung der Wälzkurven 72. Auf diese Weise wird jedes Formelement 14.1, 14.2 nicht nur in die ursprüngliche Winkelstellung gedreht, sondern auch an die Ausgangsposition in Längsrichtung gefahren.

Weitere Ausführungsformen der Wellenwicklungsherstellvorrichtung und des damit durchführbaren Wellenwicklungsherstellverfahrens werden im Folgenden anhand der Darstellung in den Fig. 13 und 14 erläutert.

In den Fig. 13 und 14 ist eine weitere Ausführungsform für die Wellenwicklungsherstellvorrichtung 10 gezeigt, die zum Herstellen von Wellenwicklungsdrähten für eine Spulenwicklung einer elektrischen Maschine durch Flachwickeln ausgebildet ist und den Linearführungsmechanismus 12, beispielsweise der in den Fig. 1 bis 6 oder auch wie in [4] gezeigten Art, und die Reihe von Formelementen 14.1, 14.2 aufweist. Wie oben bereits für die anderen Ausführungsformen beschrieben weisen die Formelemente 14.1, 14.2 jeweils die Halterung 16 zum Halten eines geradlinigen Drahtabschnitts des zu biegenden Drahts 18 und die Biegeform 20 zum Formen eines Wellenwicklungskopfbereichs zwischen den geradlinigen Drahtabschnitten auf. Die Formelemente 14.1, 14.2 sind auf dem Linearführungsmechanismus 12 relativ zueinander linear bewegbar und um jeweils eine Drehachse 22 drehbar gelagert, so dass im Betrieb aus einer in Fig. 13 und 14 gezeigten Grundstellung heraus, in der die Halterungen der Formelemente 14.1, 14.2 zueinander ausgerichtet sind, jeweils benachbarte Formelemente 14.1, 14.2 gegensinnig zueinander drehen und sich die Formelemente 14.1, 14.2 dabei mit ihren Drehachsen zueinander annähern, um so aus dem in den Halterungen gehaltenen Draht 18 einen mäanderförmigen Wellenwicklungsdraht mit geradlinigen Drahtabschnitten und dachförmigen Wellenwicklungsköpfen dazwischen zu bilden. Dies kann in der oben zu den Ausführungen gemäß den Fig. 1 bis 12 erläuterten Weise oder auch wie in einer der Literaturstellen [2] bis [4] beschrieben und gezeigt erfolgen.

Einige Ausführungsformen der Wellenwicklungsherstellvorrichtung 10, von denen ein Beispiel in Fig. 13 und 14 gezeigt ist, weisen weiter eine Drahtendenbiege- und -fixiereinrichtung 94 auf, die dazu eingerichtet ist, die Drahtenden 96, 98 des in die linear ausgerichteten Halterungen 16 eingefügten zu biegenden Drahts 18 vor der Drehbewegung der Formelemente 14.1, 14.2 umzubiegen und formschlüssig an dem zugeordneten äußeren Formelement 14.1 zu fixieren.

Wie in Fig. 14 dargestellt ist gemäß einigen Ausführungsformen der Wellenwicklungsherstellvorrichtung 10 die Drahtendenbiege- und Fixiereinrichtung 94 dazu ausgebildet, die Drahtenden 96, 98 derart zu verbiegen, dass aus den äußeren Formelementen 14.1 herausstehende Drahtenden 96, 98 versetzt parallel zu den in der Halterung 16 aufgenommenen Drahtabschnitten 100 verlaufen.

Wie in Fig. 14 dargestellt ist gemäß einigen Ausführungsformen der Wellenwicklungsherstellvorrichtung 10 die Drahtendenbiege- und Fixiereinrichtung dazu ausgebildet, die Drahtenden 96, 98 an einer äußeren Biegeform 20 der äußeren Formelemente 14.1, 14.2 zu formen.

Besondere Effekte, Vorteile und weitere optionale Merkmale dieser anhand des Beispiels der Figuren 13 und 14 erläuterten Ausführungsformen der Wellenwicklungsherstellvorrichtung 10 mit Drahtendenbiege- und -fixiereinrichtung 94 werden im Folgenden näher erläutert.

Einige Ausführungsformen der Wellenwicklungsherstellvorrichtung 10 ermöglichen eine Fixierung der Drahtenden 96, 98 einer Drahtbiegeapparatur.

Bei bevorzugten Ausführungsformen ist die Wellenwicklungsherstellvorrichtung 10 derart ausgebildet, dass die Kontur der Formelemente 14.1, 14.2 und somit auch die Endlage des Drahtes 18 der neutralen Faser entspricht, sodass die Gesamtlänge des Drahtes 18 nicht oder zumindest nur unwesentlich durch das Biegen verändert wird. Da die Biegeradien der Formelemente 14.1, 14.2 vergleichsweise klein ausfallen, werden die Biegeradien beim "freien" Biegen nicht exakt ausgeformt. Der Draht biegt sich in einem größeren Radius um die Kontur der Formelemente 14.1, 14.2 und liegt damit vor dem Gegenbiegen nicht exakt in der neutralen Faser. Durch das gegensinnige Eindrehen der Formelemente 14.1, 14.2 wird der Draht 18 zumindest bei den inneren Formelementen 14.1, 14.2 an die Biegeradien gepresst, wodurch dieser formschlüssig in Längsrichtung fixiert wird. Dagegen sind bei der bisherigen Wellenwicklungsherstellvorrichtungen nach dem Stand der Technik die Drahtenden 96, 98 der äußeren Formelemente 14.1, 14.2 zum Zeitpunkt des Flachwickelns in Längsrichtung "frei", da bisher das Ausformen der Drahtenden 96, 98 erst parallel zum Gegenbiegen erfolgt. Aufgrund der Zugspannung in den Biegeköpfen werden die Drahtenden 96, 98 jeweils zur Mitte der Formelement-Kette gezogen.

Problematisch sind hierbei besonders unkontrollierte und stetig wechselnde Einzugslängen aufgrund schwankender Drahtbiegeeigenschaften des zu verarbeitenden Drahtes 18, welche kostenbedingt nicht zu stark eingeschränkt werden können, und den dadurch resultierenden unterschiedlichen Biegeradien im ersten Schritt beim freien Biegen um die Radien der Formelemente 14.1, 14.2. Dabei liegen die Unterschiede im Bereich von mehreren Millimetern und sind daher oft nicht mit den Anforderungen eines nachgelagerten Laserschweißprozesses zum Befestigen eines Verschaltelementes für die aus den Wellenwicklungsdrähten gebildete Spulenwicklung vereinbar. Um die Anforderungen für das Laserschweißen zu erreichen, ohne dabei einen zusätzlichen Schneidprozess einzuführen, sind die Positionen der Drahtenden 96, 98 im Bereich von wenigen Zehntel toleriert. Des Weiteren sind auch die zulässigen Bereiche der Kanten, bis zu welchen die Drahtenden 96, 98 vor dem Biegen abisoliert werden, eng toleriert. Diese Toleranz ergibt sich einerseits aus einer möglichst kurzen Gesamtlänge des Stators oder sonstigen Bauteils, andererseits aus einem bestimmten Mindestabstand zwischen abisoliertem Drahtende und dem Blechpaket des Stators oder dem sonstigen Bauteil.

Die Problematik des Fixierens des Drahtes 18 liegt dabei weniger in der Funktion selbst als in den zahlreichen Randbedingungen. An dieser Stelle ist bei einigen Ausführungsformen ein (nicht dargestellter) Greifer zum Be- und Entladen der Formelemente 14.1, 14.2 zu nennen. Bei einigen Ausführungsformen fährt ein solcher Greifer von oben an die Formelemente 14.1, 14.2, greift die Drähte entlang der geraden Längen und wird in vertikale Richtung bewegt. Daher wird das Fixieren in vertikale Richtung einerseits durch den benötigten Freiraum des Greifers, andererseits durch die Aktuatorik erschwert, die die Kraft zum Fixieren einleitet und den Draht während des Be- und Entladens freigibt. Durch das Biegen der Enden 96, 98 kann auf einen Niederhalter verzichtet werden.

Bei Bedarf kann optional immer noch ein Niederhalter ergänzt werden. Ein horizontales Klemmen wird aufgrund der unterschiedlichen Breite der gestapelten Drähte kompliziert und unter Berücksichtigung des zur Verfügung stehenden Bauraumes bei kleinen Formelementen 14.1, 14.2 nahezu unmöglich. Ebenso ist das Fixieren des Drahtes mithilfe eines externen Mechanismus komplex zu realisieren, da die Formelemente 14.1, 14.2 während des Biegens sowohl die lineare Position als auch die Winkellage ändern. Ebenso muss berücksichtigt werden, dass die empfindliche Isolation des Drahtes 18 durch das Fixieren nicht beschädigt werden darf. Daher ist ein Fixieren mithilfe eines Kraft- oder Reibschlusses weniger geeignet. Des Weiteren verfügt der Draht 18 über sehr gute Gleiteigenschaften, die wiederum sehr hohe Klemmkräften bedingt. Ein Fixieren des Drahtes 18 in Längsrichtung mit Hilfe eines Kraftschlusses ist daher aufgrund der begrenzten Klemmkraft und des niedrigen Reibungskoeffizienten des Drahtes 18 stark eingeschränkt.

Einige Ausführungsformen der Wellenwicklungsherstellvorrichtung 10, von denen ein Beispiel in Fig. 13 und 14 gezeigt ist, verfügen über einen schlanken und kostengünstigen Mechanismus, der den Draht 18 in den äußeren Formelementen 14.1 bestenfalls formschlüssig fixiert, sodass sowohl die Drahtenden 96, 98 als auch die abisolierten Bereiche prozesssicher innerhalb der vorgegebenen Toleranzen liegen.

Verfahrensmäßig erfolgt hierzu insbesondere eine Neuanordnung der Prozessschritte. Im ersten Schritt werden die Drahtenden 96, 98 mithilfe der äußeren Formelemente 14.1 gebogen. Der Biegeprozess der Enden 96, 98 kann entweder extern und / oder integriert in der Biegestrecke sein. Dadurch wird der Draht 18 in Längsrichtung der Formelemente 14.1, 14.2 formschlüssig fixiert und kann ohne zusätzliche Aktuatorik in vertikale Richtung bewegt, also eingelegt oder entnommen werden.

Das Fixieren des Drahtes 18 in Längsrichtung erfolgt an den Drahtenden 96, 98. Diese werden um mindestens einen, vergleichsweise kleinen, Radius an den äußeren Formelementen 14.1 gebogen und dadurch formschlüssig und ohne den Bedarf von weiteren Komponenten fixiert. Gleichzeitig wird bei diesem Prozessschritt das Drahtende 96, 98 so ausgerichtet, dass es nachfolgend mit dem Verschaltelement verschweißt werden kann.

Es wird somit ein Wellenwicklungsherstellverfahren durchgeführt, umfassend
aa) mäanderförmiges Verbiegen eines Drahtes 18 zu einer Wellenwicklung mit geradlinigen Drahtabschnitten 100, die durch Wellenwicklungsköpfe miteinander verbunden sind und
bb) Umbiegen von Drahtenden 96, 98 des Drahtes 18,
wobei Schritt bb) vor Schritt aa) erfolgt.

Bei einigen Ausgestaltungen des Verfahrens ist vorgesehen, dass Schritt bb) formschlüssiges Fixieren der Drahtenden 96, 98 an den äußeren Formelementen 14.1 der Wellenwicklungsherstellvorrichtung 10, die zur Durchführung des Schritts aa) ausgebildet ist, umfasst.

Bei einigen Ausführungsformen wird Schritt bb) derart durchgeführt, dass die umgebogenen Drahtenden 96, 98 versetzt parallel zu dem nächsten benachbarten geradlinigen Drahtabschnitt 100 verläuft. Insbesondere lassen sich dadurch die Drähte zu Anschlussdrähten zwecks Anschluss an ein Verschaltelement, mit dem die aus den Drähten gebildete Spulenwicklung an eine Spannungsversorgung oder einen Treiber angeschlossen wird, umbiegen.

Das vorgelagerte Biegen der Drahtenden 96, 98 führt zu mehreren Vorteilen. Zum einen werden die Drahtenden 96, 98 in die gewünschten Positionen gebogen, sodass zunächst deren Ausrichtung mit der des Verschaltelements übereinstimmt. Zum anderen wird dadurch der Draht 18 formschlüssig in Längsrichtung der Formelemente 14.1, 14.2 fixiert, wodurch sichergestellt wird, dass während des Flachwickelns keine Relativbewegung zwischen den äußeren Formelementen 14.1, 14.2 und der Drahtenden 96, 98 erfolgt. Auch die Positionen der abisolierten Bereiche werden dadurch gegenüber den äußeren Formelementen 14.1 fixiert. Demnach kann die Längsposition des Drahtes 18 beim Einlegen in die Formelemente 14.1, 14.2 bereits so gewählt werden, dass die aus den Wellenwicklungsdrähten gebildete Drahtmatte nachfolgend mithilfe eines Laserschweißprozesses an einem Verschaltelement befestigt werden kann, ohne dabei einen zusätzlichen Schneidprozess zu benötigen. Des Weiteren wird durch das vorgezogene Biegen der Drahtenden 96, 98 die Funktion des Klemmens auf eine sehr einfache und kosten neutrale Weise erfüllt, da die Aktoren 102 (angedeutet durch Pfeile in Fig. 13) zum Biegen der Enden ohnehin auch bei bisherigen Verfahren bereits zum entsprechenden Biegen der Drahtenden vorgesehen werden müssen und somit keine zusätzlichen Komponenten benötigt werden.

Die Drahtendenbiege- und -fixiereinrichtung 94 weist demnach die entsprechenden Aktoren 102 und die Biegeformen 20 an den äußeren Formelementen 14.1, 14.2 sowie die entsprechend eingerichtete Steuerung 82 auf, in der die Anweisungen für das Vorziehen des Schritts des Biegens der Enden 96, 98 enthalten sind.

Die Fig. 13 und 14 veranschaulichen das formschlüssige Fixieren des Drahtes. Dabei zeigt Fig. 13 die Ausgangsposition vor dem Fixieren mit der Reihe von Formelementen 14.1, 14.2 (zu Darstellungszwecken nur drei dargestellt, in der Praxis weitaus mehr vorhanden), dem Draht 18 und der Führungsschiene 38.1, 38.2 des Linearführungsmechanismus 12, während Fig. 14 die Endposition des Fixiervorganges, nach dem Fixieren darstellt. Diese Endposition des Fixiervorganges entspricht der Ausgangsposition des Flachwickelns. Bei dem Fixiervorgang werden jeweils die Drahtenden 96, 98 an die Kontur der äußeren Formelemente 14.1 angelegt und gegengebogen, sodass die Teilbereiche des Drahtes 18, die aus den Formelementen stehen, parallel zum mittleren Teil des Drahtes 100 sind und die Ausrichtung dadurch zum Verschaltelement passt.

Anschließend an den Fixiervorgang wird bei bevorzugten Ausführungsformen das Flachwickeln mit der Wellenwicklungsherstellvorrichtung 10 gemäß Fig. 1 bis 6 durchgeführt, indem, wie oben beschrieben, die Formelemente 14.1, 14.2 mittels der Grundkinematik 80.1, 80.2 zum Drehen angetrieben werden und sich linear auf dem Linearführungsmechanismus 12 verschieben.

Die Steuerung 82 ist bei einigen Ausführungsformen dazu ausgebildet, die Wellenwicklungsherstellvorrichtung zum Durchführen des Wellenwicklungsherstellverfahrens anzusteuern. Hierzu ist insbesondere in die Steuerung 82 ein entsprechendes Computerprogramm geladen.

Bei einigen Ausführungsformen wird insbesondere automatisch ein Wellenwicklungsherstellverfahren zum Herstellen von Wellenwicklungsdrähten für eine Spulenwicklung einer elektrischen Maschine durch Flachwickeln durchgeführt, mit den Schritten:
a) Bereitstellen der Reihe von Formelementen 14.1, 14.2,
b) Einfügen eines Drahtes in die zueinander ausgerichteten Halterungen 16 der Formelemente 14.1, 14.2,
c) Antreiben von gegensinnigen Drehbewegungen jeweils benachbarter Formelemente 14.1, 14.2 mittels Veränderns des Abstands von Linearführungen 26, 28, 34 des Linearführungsmechanismus 12 zur Führung der linearen Bewegung der Formelemente 14.1, 14.2 und Umsetzen der Abstandsveränderung in Drehbewegungen der Formelemente 14.1, 14.2, und
d) Biegen eines mäanderförmigen Wellenwicklungsdrahts mit geradlinigen Drahtabschnitten 100 und dachförmigen Wellenwicklungsköpfen dazwischen durch die gegensinnigen Drehbewegungen.

Bei einigen Ausführungen des Wellenwicklungsherstellverfahren umfasst Schritt c) die Schritte: Führen der Linearbewegung der Formelemente 14.1, 14.2 auf der ersten Linearführung 26 und Verschieben der zweiten Linearführung 28 und/oder der dritten Linearführung 34 relativ zur ersten Linearführung 26 in einer Richtung quer zur Linearbewegungsrichtung der Formelemente 14.1, 14.2 und Abgreifen der relativen Verschiebebewegung der Linearführungen 26, 28, 34 mittels an der zweiten und/oder dritten Linearführung 28, 34 verschiebbar gelagerten Abgreifelementen 36.1, 36.2 von Wandlern 32.1, 32.2, die jeweils den Formelementen 14.1, 14.2 zugeordnet sind und sich mit den zugeordneten Formelementen 14.1, 14.2 in Linearbewegungsrichtung mitbewegen.

Bei einigen Ausführungen des Wellenwicklungsherstellverfahrens wird dabei die erste Linearführung 26 ortsfest gehalten, und die zweite und/oder dritte Linearführung 28, 34 werden als Verteilerschiene 42.1, 42.2 auf die erste Linearführung 26 zu und von ihr weg bewegt.

Bei einigen Ausführungsformen des Wellenwicklungsherstellverfahrens wird die lineare Position der Formelemente 14.1, 14.2 zueinander durch gegenseitiges Abstützen jeweils benachbarter Formelemente 14.1, 14.2 auf Wälzkurven 72 eingestellt.

Einige Ausführungsformen des Wellenwicklungsherstellverfahrens umfassen weiter den Schritt: Einleiten einer Presskraft zur Aufrechterhaltung der Abstützung benachbarter Formelemente 14.1, 14.2 über die Wälzkurven 72 beim Zusammenfahren und/oder beim Auseinanderfahren der Formelemente 14.1, 14.2.

Das Einleiten der Presskraft 74 kann Einleiten einer von der Drehrichtung der Formelemente unabhängigen Kraft an einen auf einem Linearführungsmechanismus 12 beweglichen Führungswagen 40.1 wenigstens eines äußeren Formelements 14.1 umfassen.

Das Einleiten der Presskraft 74 kann ferner das Einleiten wenigstens einer weiteren Kraft auf wenigstens einen weiteren auf dem Linearführungsmechanismus 12 beweglichen Führungswagen 40.1, 40.2 eines weiteren Formelements 14.1, 14.2 umfassen.

Das Einleiten der Presskraft 74 kann weiterhin:
- relative Linearbewegung mehrerer Formelemente 14.1, 14.2 und/oder
- Einleitung einer vorzugsweise elastischen Spannkraft zum Zusammenspannen benachbarter Formelemente
umfassen.

Es sind Vorrichtungen (10) und Verfahren zum Herstellen von Wellenwicklungsdrähten für eine Spulenwicklung einer elektrischen Maschine durch Flachwickeln beschrieben worden, wobei eine Reihe von Formelementen (14.1, 14.2), die jeweils eine Halterung (16) zum Halten eines geradlinigen Drahtabschnitts (100) eines zu biegenden Drahts (18) und eine Biegeform (20) zum Formen eines Wellenwicklungskopfbereichs zwischen den geradlinigen Drahtabschnitten (100) aufweisen, auf einem Linearführungsmechanismus (12) relativ zueinander linear bewegt und um jeweils eine Drehachse (22) gedreht werden, um durch gegensinnige Drehung benachbarter Formelemente (14.1, 14.2) unter Annäherung mit ihren Drehachsen (22) aus dem in den Halterungen (16) gehaltenen Draht (18) einen mäanderförmigen Wellenwicklungsdraht mit geradlinigen Drahtabschnitten und dachförmigen Wellenwicklungsköpfen dazwischen zu bilden. Zur Verbesserung der Flexibilität und/oder der Prozesssicherheit wird vorgeschlagen, eine Abstandsänderung von Linearführungen (26, 28, 34) des Linearführungsmechanismus in die Drehbewegung der Formelemente (14.1, 14.2) umzuwandeln. Optional wird weiter vorgeschlagen, ein Umbiegen von Drahtenden (96, 98) des Drahtes vor dem mäanderförmigen Biegen des Wellenwicklungsdrahtes vorzunehmen, um so insbesondere auf einfach Art den Draht (18) zum Umbiegen zu fixieren.

### Bezugszeichenliste:

- 10: Wellenwicklungsherstellvorrichtung
- 12: Linearführungsmechanismus
- 14.1: erstes Formelement
- 14.2: zweites Formelement
- 16: Halterung
- 18: zu biegender Draht
- 20: Biegeform
- 22: Drehachse
- 24.1: erste Drehrichtung
- 24.2: zweite Drehrichtung
- 26: erste Linearführung
- 28: zweite Linearführung
- 30: Wandlermechanismus
- 32.1: erster Wandler
- 32.2: zweiter Wandler
- 34: dritte Linearführung
- 36.1: erstes Abgreifelement
- 36.2: zweites Abgreifelement
- 38.1: erste Führungsschiene
- 38.2: zweite Führungsschiene
- 40.1: erster Führungswagen
- 40.2: zweiter Führungswagen
- 42.1: erste Verteilerschiene
- 42.2: zweite Verteilerschiene
- 44: Schlitz
- 46: Rolle
- 48: Hebelkinematik
- 50: Verteilerschienenwagen
- 52: Führung für Verteilerschiene
- 54: Drehlager
- 55: drehsteife Verbindung
- 56: Ausleger
- 58: Hebeleinheit
- 60: Kniehebel
- 62: erster Kniehebelarm
- 64: zweiter Kniehebelarm
- 66: Knickgelenk
- 68: Aktuator
- 68.1: erster Aktuator
- 68.2: zweiter Aktuator
- 69: Schraube
- 70: mechanische Steuerkurve
- 72: Wälzkurve
- 74: Presskraft
- 80.1: erste Grundkinematik
- 80.2: zweite Grundkinematik
- 82: Steuerung
- 84.1: erster Verteiler
- 84.2: zweiter Verteiler
- 86: Presskrafteinleiteinrichtung
- 88: Spanneinrichtung
- 90: Spannkraft
- 92: Presskraft-Aktuator
- 94: Drahtendenbiege- und -fixiereinrichtung
- 96: erstes Drahtende
- 98: zweites Drahtende
- 100: geradliniger Drahtabschnitt
- 102: Aktor (der Drahtendenbiege- und fixiereinrichtung)

## Patentansprüche

1. Wellenwicklungsherstellvorrichtung (10) zum Herstellen von Wellenwicklungsdrähten für eine Spulenwicklung einer elektrischen Maschine durch Flachwickeln, umfassend:
einen Linearführungsmechanismus (12) und
eine Reihe von Formelementen (14.1, 14.2), die jeweils eine Halterung (16) zum Halten eines geradlinigen Drahtabschnitts (100) eines zu biegenden Drahts (18) und eine Biegeform (20) zum Formen eines Wellenwicklungskopfbereichs zwischen den geradlinigen Drahtabschnitten (100) aufweisen, wobei die Formelemente (14.1, 14.2) auf dem Linearführungsmechanismus (12) relativ zueinander linear bewegbar und um jeweils eine Drehachse (22) drehbar gelagert sind derart, dass aus einer Grundstellung heraus, in der die Halterungen (16) der Formelemente (14.1, 14.2) zueinander ausgerichtet sind, jeweils benachbarte Formelemente (14.1, 14.2) gegensinnig zueinander drehen und sich die Formelemente (14.1, 14.2) dabei mit ihren Drehachsen (22) zueinander annähern, um so aus dem in den Halterungen (16) gehaltenen Draht (18) einen mäanderförmigen Wellenwicklungsdraht mit geradlinigen Drahtabschnitten und dachförmigen Wellenwicklungsköpfen dazwischen zu bilden,
wobei der Linearführungsmechanismus (12) eine erste Linearführung (26) und eine zweite Linearführung (28) aufweist, **dadurch gekennzeichnet,**
**dass** der Abstand der ersten Linearführung (26) und der zweiten Linearführung (28) zueinander veränderbar ist,
wobei weiter ein Wandlermechanismus (30) zum Umsetzen einer Veränderung des Abstandes der ersten Linearführung (26) und der zweiten Linearführung (28) in die Drehbewegung der Formelemente (14.1, 14.2) vorgesehen ist.

2. Wellenwicklungsherstellvorrichtung (10) nach Anspruch 1, **dadurch gekennzeichnet,**
**dass** der Wandlermechanismus (30) pro zu drehendem Formelement (14.1, 14.2) jeweils einen Wandler (32.1, 32.2) aufweist, der mit dem zugeordneten Formelement (14.1, 14.2) mitbeweglich auf dem Linearführungsmechanismus (12) gelagert ist.

3. Wellenwicklungsherstellvorrichtung (10) nach Anspruch 2, **dadurch gekennzeichnet,**
**dass** die Reihe von Formelementen (14.1, 14.2) alternierend erste und zweite Formelemente (14.1, 14.2) aufweist, wobei die zweiten Formelemente (14.2) zur gegensinnigen Drehung zu den ersten Formelementen (14.1) ausgebildet sind,
wobei der Linearführungsmechanismus (12) eine dritte Linearführung (34) aufweist, wobei die erste Linearführung (26) zwischen der zweiten (28) und dritten Linearführung (34) angeordnet ist und die zweite (28) und dritte Linearführung (34) zum Antreiben der Drehbewegung auf die erste Linearführung (26) zu und von der ersten Linearführung (26) weg bewegbar ist,
wobei erste Wandler (32.1) zum Antreiben der Drehbewegung der ersten Formelemente (14.1) erste Abgreifelemente (36.1) aufweisen, die linear beweglich an der zweiten Linearführung (28) gelagert sind und zweite Wandler (32.2) zum Antreiben der Drehbewegung der zweiten Formelemente (14.2) zweite Abgreifelemente (36.2) aufweisen, die linear beweglich an der dritten Linearführung (34) gelagert sind.

4. Wellenwicklungsherstellvorrichtung (10) nach einem der voranstehenden Ansprüche, **dadurch gekennzeichnet,**
**dass** die erste Linearführung (26) eine ortsfeste Führungsschiene (38.1, 38.2) aufweist, auf der Führungswagen (40.1, 40.2) frei verschiebbar gelagert sind, auf denen jeweils ein Formelement (14.1, 14.2) mit seiner Drehachse (22) drehbar gelagert ist, und
**dass** die zweite Linearführung (28) eine Verteilerschiene (42.1) aufweist, die quer zur Erstreckung der Führungsschiene (38.1, 38.2) verschiebbar gelagert ist.

5. Wellenwicklungsherstellvorrichtung (10) nach einem der voranstehenden Ansprüche, **gekennzeichnet durch** einen Aktuator (68, 68.1, 68.2) zum Verändern des Abstands der Linearführungen (26, 28, 34) des Linearführungsmechanismus (12).

6. Wellenwicklungsherstellvorrichtung (10) nach einem der voranstehenden Ansprüche, **dadurch gekennzeichnet,**
**dass** die Formelemente (14.1, 14.2) frei relativ zueinander verschiebbar auf dem Linearführungsmechanismus (12) gelagert sind und dass benachbarte Formelemente (14.1, 14.2) über wenigstens eine mechanische Steuerkurve (70) miteinander derart in Eingriff sind, dass die relative Verschiebung der Formelemente (14.1, 14.2) zueinander über die Drehung der Formelemente (14.1, 14.2) angetrieben wird.

7. Wellenwicklungsherstellvorrichtung (10) nach einem der voranstehenden Ansprüche, **gekennzeichnet durch** eine Drahtendenbiege- und -fixiereinrichtung (94), die dazu eingerichtet ist, die Drahtenden (96, 98) des in die linear ausgerichteten Halterungen (16) eingefügten zu biegenden Drahts (18) vor der Drehbewegung der Formelemente (14.1, 14.2) umzubiegen und formschlüssig an dem zugeordneten äußeren Formelement (14.1) zu fixieren.

8. Wellenwicklungsherstellvorrichtung (10) nach Anspruch 7, **dadurch gekennzeichnet,**
**dass** die Drahtendenbiege- und Fixiereinrichtung (94) dazu ausgebildet ist,
8.1 die Drahtenden (96, 98) derart zu verbiegen, dass aus den äußeren Formelementen (14.1) herausstehende Drahtenden (96, 98) versetzt parallel zu den in der Halterung (16) aufgenommenen Drahtabschnitten (100) verlaufen, und/oder
8.2 die Drahtenden (96, 98) an einer äußeren Biegeform (20) der äußeren Formelemente (14.1, 14.2) zu formen.

9. Wellenwicklungsherstellverfahren zum Herstellen von Wellenwicklungsdrähten für eine Spulenwicklung einer elektrischen Maschine durch Flachwickeln, umfassend:
a) Bereitstellen einer Reihe von Formelementen (14.1, 14.2), die jeweils eine Halterung (16) zum Halten eines geradlinigen Drahtabschnitts (100) eines zu biegenden Drahts (18) und eine Biegeform (20) zum Formen eines Wellenwicklungskopfbereichs zwischen den geradlinigen Drahtabschnitten aufweisen, wobei die Formelemente (14.1, 14.2) relativ zueinander linear bewegbar und um jeweils eine Drehachse (22) drehbar gelagert sind,
b) Einfügen eines Drahtes (18) in die zueinander ausgerichteten Halterungen (16) der Formelemente (14.1, 14.2),
c) Antreiben von gegensinnigen Drehbewegungen jeweils benachbarter Formelemente (14.1, 14.2) mittels Veränderns eines Abstands von Linearführungen (26, 28, 34) eines Linearführungsmechanismus (12) zur Führung der linearen Bewegung der Formelemente (14.1, 14.2) und Umsetzen der Abstandsveränderung in Drehbewegungen der Formelemente (14.2, 14.2), und
d) Biegen eines mäanderförmigen Wellenwicklungsdrahts mit geradlinigen Drahtabschnitten und dachförmigen Wellenwicklungsköpfen dazwischen durch die gegensinnigen Drehbewegungen.

10. Wellenwicklungsherstellverfahren nach Anspruch 9, **dadurch gekennzeichnet,**
**dass** Schritt c) die Schritte umfasst:
Führen der Linearbewegung der Formelemente (14.1, 14.2) auf einer ersten Linearführung (26) und Verschieben einer zweiten und/oder einer dritten Linearführung (28, 34) relativ zur ersten Linearführung (26) in einer Richtung quer zur Linearbewegungsrichtung der Formelemente (14.1, 14.2) und Abgreifen der relativen Verschiebebewegung der Linearführungen (26, 28, 34) mittels an der zweiten und/oder dritten Linearführung (28, 34) verschiebbar gelagerten Abgreifelementen (36.1, 36.2) von Wandlern (32.1, 32.2), die jeweils den Formelementen (14.1, 14.2) zugeordnet sind und sich mit den zugeordneten Formelementen (14.1, 14.2) in Linearbewegungsrichtung mitbewegen.

11. Wellenwicklungsherstellverfahren nach Anspruch 10, **dadurch gekennzeichnet,**
**dass** in Schritt c) die erste Linearführung (26) ortsfest gehalten wird und die zweite und/oder dritte Linearführung (28, 34) als Verteilerschiene (42.1, 42.2) auf die erste Linearführung (26) zu und von ihr weg bewegt werden.

12. Wellenwicklungsherstellverfahren nach einem der Ansprüche 9 bis 11, **dadurch gekennzeichnet,**
**dass** die lineare Position der Formelemente (14.2, 14.2) zueinander durch gegenseitiges Abstützen jeweils benachbarter Formelemente (14.1, 14.2) auf Wälzkurven (72) eingestellt wird.

13. Wellenwicklungsherstellverfahren nach einem der Ansprüche 9 bis 12, umfassend
aa) mäanderförmiges Verbiegen eines Drahtes (18) zu einer Wellenwicklung mit geradlinigen Drahtabschnitten (100), die durch Wellenwicklungsköpfe miteinander verbunden sind und
bb) Umbiegen von Drahtenden (96, 98) des Drahtes (18),
wobei Schritt bb) vor Schritt aa) erfolgt.

14. Wellenwicklungsherstellverfahren nach Anspruch 13, **dadurch gekennzeichnet,**
**dass** Schritt bb) formschlüssiges Fixieren der Drahtenden (96, 98) an äußeren Formelementen (14.1, 14.2) einer Wellenwicklungsherstellvorrichtung zur Durchführung des Schritts aa) umfasst.

15. Computerprogramm enthaltend maschinenlesbare Anweisungen, die bewirken, dass eine Wellenwicklungsherstellvorrichtung (10) nach einem der Ansprüche 1 bis 8 das Wellenwicklungsherstellverfahren nach einem der Ansprüche 9 bis 14 durchführt.

## Claims

1. Wave winding production device (10) for producing wave winding wires for a coil winding of an electric machine via flat winding, comprising:
a linear guide mechanism (12) and
a row of shaping elements (14.1, 14.2) each having a holder (16) for holding a straight wire section (100) of a wire (18) to be bent and a bending mold (20) for shaping a wave winding head region between the straight wire sections (100), the shaping elements (14.1, 14.2) being linearly movable relative to each other on the linear guide mechanism (12) and rotatably mounted about a respective axis of rotation (22) in such a way that, from an initial position in which the holders (16) of the shaping elements (14. 1, 14.2) are aligned with respect to one another, respectively neighboring shaping elements (14.1, 14.2) rotate in mutually opposite directions and the shaping elements (14.1, 14.2) thereby approach one another with their axes of rotation (22) in order to form a meandering wave winding wire with straight wire sections and chevron-shaped wave winding heads in between from the wire (18) held in the holders (16),
wherein the linear guide mechanism (12) comprises a first linear guide (26) and a second linear guide (28), **characterized in that**
the spacing between the first linear guide (26) and the second linear guide (28) to each other is variable,
wherein further a converter mechanism (30) for converting a change in the spacing of the first linear guide (26) and the second linear guide (28) into the rotational movement of the shaping elements (14.1, 14.2) is provided.

2. Wave winding production device (10) according to claim 1, **characterized in that** the converter mechanism (30) has one converter (32.1, 32.2) for each shaping element (14.1, 14.2) to be rotated, which converter (32.1, 32.2) is mounted on the linear guide mechanism (12) such that it can move with the associated shaping element (14.1, 14.2).

3. Wave winding production device (10) according to claim 2, **characterized in that** the row of shaping elements (14.1, 14.2) comprises alternating first and second shaping elements (14.1, 14.2), wherein the second shaping elements (14.2) are adapted to rotate in opposite directions to the first shaping elements (14.1),
wherein the linear guide mechanism (12) comprises a third linear guide (34), the first linear guide (26) being disposed between the second (28) and third linear guides (34), and the second (28) and third linear guides (34) being movable toward and away from the first linear guide (26) for driving the rotational movement,
wherein first converters (32.1) for driving the rotational movement of the first shaping elements (14.1) comprise first pick-off elements (36.1) which are linearly movably mounted on the second linear guide (28), and second converters (32.2) for driving the rotational movement of the second shaping elements (14.2) comprise second pick-off elements (36.2) which are linearly movably mounted on the third linear guide (34).

4. Wave winding production device (10) according to any one of the preceding claims, **characterized in that**
the first linear guide (26) has a stationary guide rail (38.1, 38.2) on which guide carriages (40.1, 40.2) are mounted in a freely displaceable manner, on each of which a shaping element (14.1, 14.2) is rotatably mounted with its axis of rotation (22), and
**in that** the second linear guide (28) has a distributor rail (42.1) which is mounted for displacement transversely to the extension of the guide rail (38.1, 38.2).

5. Wave winding production device (10) according to any one of the preceding claims, **characterized by** an actuator (68, 68.1, 68.2) for changing the spacing of the linear guides (26, 28, 34) of the linear guide mechanism (12).

6. Wave winding production device (10) according to any one of the preceding claims, **characterized in that**
the shaping elements (14.1, 14.2) are mounted freely displaceable relative to each other on the linear guide mechanism (12) and that adjacent shaping elements (14.1, 14.2) are engaged with each other via at least one mechanical control cam (70) in such a way that the relative displacement of the shaping elements (14.1, 14.2) to each other is driven through the rotation of the shaping elements (14.1, 14.2).

7. Wave winding production device (10) according to any one of the preceding claims, **characterized by** a wire-end bending and fixing device (94) adapted to bend the wire ends (96, 98) of the wire (18) to be bent inserted into the linearly aligned holders (16) prior to the rotational movement of the shaping elements (14.1, 14.2) and to positively fix them to the associated outer shaping element (14.1).

8. Wave wind production device (10) according to claim 7, **characterized in that** the wire-end bending and fixing device (94) is designed
8.1 to bend the wire ends (96, 98) in such a way that wire ends (96, 98) projecting from the outer shaping elements (14.1) extend in an offset manner parallel to the wire sections (100) received in the holder (16) an/or
8.2 to shape the wire ends (96, 98) on an outer bending mold (20) of the outer shaping elements (14.1, 14.2).

9. Wave winding production method for producing wave winding wires for a coil winding of an electric machine via flat winding, comprising:
a) providing a row of shaping elements (14.1, 14.2) each having a holder (16) for holding a straight wire section (100) of a wire (18) to be bent and a bending mold (20) for shaping a wave winding head region between the straight wire sections, the shaping elements (14.1, 14.2) being linearly movable relative to each other and rotatably supported about a respective rotation axis (22),
b) inserting a wire (18) into the mutually aligned holders (16) of the shaping elements (14.1, 14.2),
c) driving opposite rotational movements of respectively adjacent shaping elements (14.1, 14.2) by changing a spacing of linear guides (26, 28, 34) of a linear guide mechanism (12) for guiding the linear movement of the shaping elements (14.1, 14.2) and converting the change in spacing into rotational movements of the shaping elements (14.2, 14.2), and
d) bending a meandering wave winding wire having straight wire sections and chevron-shaped wave winding heads therebetween by the opposite rotational movements.

10. Wave winding production method according to claim 9, **characterized in that** step c) comprises the steps of:
guiding the linear movement of the shaping elements (14.1, 14.2) on a first linear guide (26) and displacing a second and/or a third linear guide (28, 34) relative to the first linear guide (26) in a direction transverse to the direction of linear movement of the shaping elements (14.1, 14.2), and picking-off the relative displacement movement of the linear guides (26, 28, 34) by means of pick-off elements (36.1, 36.2), movably mounted on the second and/or third linear guide (28, 34), of converters (32.1, 32.2) that are associated in each case with the shaping elements (14.1, 14.2) and move along with the associated shaping elements (14.1, 14.2) in the direction of linear movement.

11. Wave winding production method according to claim 10, **characterized in that** in step c) the first linear guide (26) is held stationary and the second and/or third linear guide (28, 34) are moved towards and away from the first linear guide (26) as a distributor rail (42.1, 42.2).

12. Wave winding production method according to any one of claims 9 to 11, **characterized in that**
the linear position of the shaping elements (14.2, 14.2) relative to each other is adjusted by supporting respectively neighboring shaping elements (14.1, 14.2) against each other on pitch curves (72).

13. Wave winding production method according to any one of claims 9 to 12, **characterized by**
aa) meandering bending of a wire (18) into a wave winding having straight wire sections (100) interconnected by wave winding heads, and
bb) bending wire ends (96, 98) of the wire (18),
wherein step bb) is carried out before step aa).

14. Wave winding production method according to claim 13, **characterized in that** step bb) comprises positively fixing the wire ends (96, 98) to outer shaping elements (14.1, 14.2) of a wave winding production device for carrying out step aa).

15. Computer program containing machine-readable instructions for causing a wave winding production device (10) according to any one of claims 1 to 8 to carry out the wave winding production method according to any one of claims 9 to 14.

## Revendications

1. Dispositif de production d'enroulement ondulé (10) pour produire des fils d'enroulement ondulé pour l'enroulement d'une bobine de machine électrique par enroulement plat, comprenant:
un mécanisme de guidage linéaire (12) et
une rangée d'éléments de façonnage (14.1, 14.2) ayant chacun un support (16) pour tenir une section droite (100) d'un fil (18) à plier et un moule de pliage (20) pour façonner une zone de tête d'enroulement ondulé entre les sections droites (100), les éléments de façonnage (14. 1, 14.2) étant mobiles linéairement l'un par rapport à l'autre sur le mécanisme de guidage linéaire (12) et montés de manière rotative autour d'un axe de rotation respectif (22) de telle manière que, à partir d'une position initiale dans laquelle les supports (16) des éléments de façonnage (14. 1, 14.2) sont alignés l'un par rapport à l'autre, des éléments de façonnage respectivement voisins (14.1, 14.2) tournent dans des directions mutuellement opposées et les éléments de de façonnage (14.1, 14.2) se rapprochent ainsi l'un de l'autre avec leurs axes de rotation (22) afin de former un fil d'enroulement ondulé en forme de méandre ayant des sections de fil droites et des têtes d'enroulement ondulé en forme de chevron entre les deux à partir du fil (18) maintenu dans les supports (16),
le mécanisme de guidage linéaire (12) comprenant un premier guide linéaire (26) et un second guide linéaire (28), **caractérisé en ce que**
l'espacement entre le premier guide linéaire (26) et le second guide linéaire (28) est variable, un mécanisme de conversion (30) pour convertir un changement dans l'espacement du premier guide linéaire (26) et du second guide linéaire (28) en un mouvement de rotation des éléments de façonnage (14.1, 14.2) étant également prévu.

2. Dispositif de production d'enroulement ondulé (10) selon la revendication 1, **caractérisé en ce que**
le mécanisme de conversion (30) comporte un convertisseur (32.1, 32.2) pour chaque élément de façonnage (14.1, 14.2) à tourner, lequel convertisseur (32.1, 32.2) est monté sur le mécanisme de guidage linéaire (12) de sorte qu'il peut se déplacer avec l'élément de façonnage associé (14.1, 14.2).

3. Dispositif de production d'enroulement ondulé (10) selon la revendication 2, **caractérisé en ce que**
la rangée d'éléments de façonnage (14.1, 14.2) comprend une alternance de premiers et de seconds éléments de façonnage (14.1, 14.2), les seconds éléments de façonnage (14.2) étant adaptés pour tourner dans des directions opposées à celles des premiers éléments de façonnage (14.1),
dans lequel le mécanisme de guidage linéaire (12) comprend un troisième guide linéaire (34), le premier guide linéaire (26) étant disposé entre les deuxième (28) et troisième guides linéaires (34), et les deuxième (28) et troisième guides linéaires (34) pouvant être rapprochés et éloignés du premier guide linéaire (26) pour entraîner le mouvement de rotation,
dans lequel des premiers convertisseurs (32.1) pour entraîner le mouvement de rotation des premiers éléments de façonnage (14.1) comprennent des premiers éléments de prélèvement (36.1) qui sont montés linéairement mobiles sur le deuxième guide linéaire (28), et les deuxièmes convertisseurs (32.2) pour entraîner le mouvement de rotation des deuxièmes éléments de façonnage (14.2) comprennent des deuxièmes éléments de prélèvement (36.2) qui sont montés linéairement mobiles sur le troisième guide linéaire (34).

4. Dispositif de production d'enroulement ondulé (10) selon l'une quelconque des revendications précédentes, **caractérisé en ce que**
le premier guide linéaire (26) comporte un rail de guidage fixe (38.1, 38.2) sur lequel sont montés de manière librement déplaçable des chariots de guidage (40.1, 40.2) sur chacun desquels est monté de manière rotative un élément de façonnage (14.1, 14.2) avec son axe de rotation (22), et
**en ce que** le deuxième guide linéaire (28) comporte un rail de distribution (42.1) qui est monté pour se déplacer transversalement à l'extension du rail de guidage (38.1, 38.2).

5. Dispositif de production d'enroulement ondulé (10) selon l'une quelconque des revendications précédentes, **caractérisé par** un actionneur (68, 68.1, 68.2) pour modifier l'écartement des guides linéaires (26, 28, 34) du mécanisme de guidage linéaire (12).

6. Dispositif de production d'enroulement ondulé (10) selon l'une quelconque des revendications précédentes, **caractérisé en ce que**
les éléments de façonnage (14.1, 14.2) sont montés librement déplaçables les uns par rapport aux autres sur le mécanisme de guidage linéaire (12) et que les éléments de façonnage adjacents (14.1, 14.2) sont engagés les uns avec les autres par l'intermédiaire d'au moins une came de commande mécanique (70) de manière à ce que le déplacement relatif des éléments de façonnage (14.1, 14.2) les uns par rapport aux autres soit entraîné par la rotation des éléments de façonnage (14.1, 14.2).

7. Dispositif de production d'enroulement ondulé (10) selon l'une quelconque des revendications précédentes,
**caractérisé par** un dispositif de pliage et de fixation de l'extrémité de fil (94) adapté pour plier les extrémités (96, 98) du fil (18) à plier inséré dans les supports (16) alignés linéairement avant le mouvement de rotation des éléments de façonnage (14.1, 14.2) et pour les fixer positivement à l'élément de façonnage extérieur associé (14.1).

8. Dispositif de production d'enroulement ondulé (10) selon la revendication 7, **caractérisé en ce que** le dispositif de pliage et de fixation de l'extrémité de fil (94) est conçu pour
8.1 plier les extrémités de fil (96, 98) de telle sorte que les extrémités de fil (96, 98) dépassant des éléments de façonnage extérieurs (14.1) s'étendent de manière décalée parallèlement aux sections de fils (100) reçues dans le support (16), et/ou
8.2 façonner les extrémités de fil (96, 98) sur un moule de pliage extérieur (20) des éléments de façonnage extérieurs (14.1, 14.2).

9. Procédé de production d'enroulement ondulé pour produire des fils d'enroulement ondulé pour un enroulement de bobine d'une machine électrique par enroulement plat, comprenant:
a) fournir une rangée d'éléments de façonnage (14.1, 14.2) ayant chacun un support (16) pour tenir une section droite (100) d'un fil (18) à plier et un moule de pliage (20) pour façonner une région de tête d'enroulement ondulé entre les sections droites de fil, les éléments de façonnage (14.1, 14.2) étant mobiles linéairement les uns par rapport aux autres et supportés de manière rotative autour d'un axe de rotation respectif (22),
b) insérer un fil (18) dans les supports (16) mutuellement alignés des éléments de façonnage (14.1, 14.2),
c) entraîner des mouvements de rotation opposés des éléments de façonnage adjacents (14.1, 14.2) en modifiant l'espacement des guides linéaires (26, 28, 34) d'un mécanisme de guidage linéaire (12) pour guider le mouvement linéaire des éléments de façonnage (14.1, 14.2) et en convertissant le changement d'espacement en mouvements de rotation des éléments de façonnage (14.2, 14.2), et
d) plier un fil d'enroulement en forme de méandre ayant des sections de fil droites et des têtes d'enroulement ondulé en forme de chevron entre les deux par les mouvements de rotation opposés.

10. Procédé de production d'enroulement ondulé selon la revendication 9, **caractérisé en ce que** l'étape c) comprend les étapes suivantes:
guider le mouvement linéaire des éléments de façonnage (14.1, 14.2) sur un premier guide linéaire (26) et déplacer un deuxième et/ou un troisième guide linéaire (28, 34) par rapport au premier guide linéaire (26) dans une direction transversale à la direction du mouvement linéaire des éléments de façonnage (14.1, 14.2), et prélever le mouvement de déplacement relatif des guides linéaires (26, 28, 34) au moyen d'éléments de prélèvement (36.1, 36.2), montés de manière mobile sur le deuxième et/ou le troisième guide linéaire (28, 34), de convertisseurs (32.1, 32.2) qui sont respectivement associés aux éléments de façonnage (14.1, 14.2) et se déplacent avec les éléments de façonnage associés (14.1, 14.2) dans la direction du mouvement linéaire.

11. Procédé de production d'enroulement ondulé selon la revendication 10, **caractérisé en ce que**
à l'étape c), le premier guide linéaire (26) est maintenu immobile et le deuxième et/ou le troisième guide linéaire (28, 34) se rapprochent et s'éloignent du premier guide linéaire (26) en tant que rail de distribution (42.1, 42.2).

12. Procédé de production d'enroulement ondulé selon l'une quelconque des revendications 9 à 11, **caractérisé en ce que**
la position linéaire des éléments de façonnage (14.2, 14.2) les uns par rapport aux autres est ajustée en soutenant respectivement les éléments de façonnage voisins (14.1, 14.2) les uns contre les autres sur des courbes de roulement (72).

13. Procédé de production d'enroulement ondulé selon l'une quelconque des revendications 9 à 12, comprenant
aa) le cintrage en méandres d'un fil (18) en un enroulement ondulé ayant des sections de fil droites (100) interconnectées par des têtes d'enroulement ondulées, et
bb) le pliage d'extrémités (96, 98) du fil (18),
l'étape bb) étant exécutée avant l'étape aa).

14. Procédé de production d'enroulement ondulé selon la revendication 13, **caractérisée en ce que**
l'étape bb) consiste à fixer positivement les extrémités de fil (96, 98) aux éléments de façonnage extérieurs (14.1, 14.2) d'un dispositif de production d'enroulement ondulé pour l'exécution de l'étape aa).

15. Programme d'ordinateur contenant des instructions lisibles par une machine pour amener un dispositif de production d'enroulement d'ondes (10) selon l'une quelconque des revendications 1 à 8 à mettre en oeuvre le procédé de production d'enroulement ondulé selon l'une quelconque des revendications 9 à 14.
